# EUROPEAN PATENT APPLICATION

(11) **EP 4 478 642 A1**
(43) Date of publication of application: **18.12.2024**
(21) Application number: 23752434.3
(22) Date of filing: 10.02.2023
(51) Int. Cl.: H04L 5/00, H04W 72/23

(54) **DOWNLINK TCI STATE DETERMINATION METHOD AND APPARATUS, TERMINAL, AND NETWORK SIDE DEVICE**

(30) Priority: 10.02.2022 CN 202210125783; 14.02.2022 CN 202210134762
(71) Applicant: VIVO MOBILE COMMUNICATION CO., LTD., Dongguan, Guangdong 523863 (CN)
(72) Inventor: YANG, Yu, Dongguan, Guangdong 523863 (CN)
(74) Representative: Lavoix
(86) International application number: PCT/CN2023/075441
(87) International publication number: WO 2023/151656

(57) **Abstract**

This application discloses a method and an apparatus for determining a downlink TCI state, a terminal, and a network side device, and belongs to the field of communications technologies. The method for determining a downlink TCI state in embodiments of this application includes: A terminal obtains common beam information indicated by a network side device. The common beam information includes N first transmission configuration indicator TCI states. The first TCI state is a joint TCI state or a separate downlink DL TCI state. N is an integer greater than or equal to 1. The terminal determines a target TCI state of a target downlink channel based on target information.

## Description

### CROSS-REFERENCE TO RELATED APPLICATIONS

This application claims priority to Chinese Patent Application No. 202210125783.0, filed on February 10, 2022 in China and Chinese Patent Application No. 202210134762.5, filed on February 14, 2022 in China, which are incorporated herein by reference in their entirety.

### TECHNICAL FIELD

This application belongs to the field of communications technologies, and specifically, to a method and an apparatus for determining a downlink TCI state, a terminal, and a network side device.

### BACKGROUND

In a multiple transmission and reception point (Multi Transmission Reception Point, mTRP) scenario, beam information of various channels is based on a scheme before a unified transmission configuration indicator (Transmission Configuration Indicator, TCI) framework (unified TCI framework) in the 3rd generation partnership project (3rd Generation Partnership Project, 3GPP) release 17 (Release 17, R17), that is, a network side device needs to indicate a TCI state (state) of each channel by using a beam indication (Beam Indication) scheme corresponding to the channel, so that a terminal determines, based on the TCI state indicated by the network side device, a beam to be use for transmission. Consequently, complexity of a beam indication process for each channel is increased.

### SUMMARY

Embodiments of this application provide a method and an apparatus for determining a downlink TCI state, a terminal, and a network side device, which can simplify a beam indication process for each downlink channel by indicating a common TCI state for different downlink channels.

According to a first aspect, a method for determining a downlink TCI state is provided, where the method is applied to a terminal, and the method includes:

The terminal obtains common beam information indicated by a network side device. The common beam information includes N first transmission configuration indicator TCI states. The first TCI state is a joint TCI state or a separate downlink DL TCI state. N is an integer greater than or equal to 1.

The terminal determines a target TCI state of a target downlink channel based on target information, where the target information includes at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel.

The first identification information includes at least one of the following:
identification information of a control resource set CORESET;
identification information of associated search spaces SS, where the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

According to a second aspect, an apparatus for determining a downlink TCI state is provided, where the apparatus is used in a terminal, and the apparatus includes:
a first obtaining module, configured to obtain common beam information indicated by a network side device, where the common beam information includes N first transmission configuration indicator TCI states, the first TCI state is a joint TCI state or a separate downlink DL TCI state, and N is an integer greater than or equal to 1; and
a first determining module, configured to determine a target TCI state of a target downlink channel based on target information, where the target information includes at least one of the following:
   a quantity of the first TCI states;
   an arrangement sequence or a location of the first TCI state;
   a correspondence between the first TCI state and first identification information;
   a type of the target downlink channel;
   a transmission mode of the target downlink channel;
   a time-domain behavior of the target downlink channel or a time-domain behavior of information carried on the target downlink channel;
   a quantity of pieces of first identification information corresponding to the target downlink channel; and
   a value of first identification information corresponding to the target downlink channel.

The first identification information includes at least one of the following:
identification information of a control resource set CORESET;
identification information of associated search spaces SS, where the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

According to a third aspect, a method for determining a downlink TCI state is provided, where the method is applied to a network side device, and the method includes:
a first obtaining module, configured to obtain common beam information indicated by a network side device, where the common beam information includes N first transmission configuration indicator TCI states, the first TCI state is a joint TCI state or a separate downlink DL TCI state, and N is an integer greater than or equal to 1; and
a first determining module, configured to determine a target TCI state of a target downlink channel based on target information, where the target information includes at least one of the following:
   a quantity of the first TCI states;
   an arrangement sequence or a location of the first TCI state;
   a correspondence between the first TCI state and first identification information;
   a type of the target downlink channel;
   a transmission mode of the target downlink channel;
   a time-domain behavior of the target downlink channel or a time-domain behavior of information carried on the target downlink channel;
   a quantity of pieces of first identification information corresponding to the target downlink channel; and
   a value of first identification information corresponding to the target downlink channel.

The first identification information includes at least one of the following:
identification information of a control resource set CORESET;
identification information of associated search spaces SS, where the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

According to a fourth aspect, an apparatus for determining a downlink TCI state is provided, where the apparatus is used in a network side device, and the apparatus includes:
an indication module, configured to indicate common beam information to a terminal, where the common beam information includes N first transmission configuration indicator TCI states, the first TCI state is a joint TCI state or a separate downlink DL TCI state, and N is an integer greater than or equal to 1; and
a second determining module, configured to determine a target TCI state of a target downlink channel based on target information, where the target information includes at least one of the following:
   a quantity of the first TCI states;
   an arrangement sequence or a location of the first TCI state;
   a correspondence between the first TCI state and first identification information;
   a type of the target downlink channel;
   a transmission mode of the target downlink channel;
   a time-domain behavior of the target downlink channel or a time-domain behavior of information carried on the target downlink channel;
   a quantity of pieces of first identification information corresponding to the target downlink channel; and
   a value of first identification information corresponding to the target downlink channel.

The first identification information includes at least one of the following:
identification information of a control resource set CORESET;
identification information of associated search spaces SS, where the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

According to a fifth aspect, a terminal is provided. The terminal includes a processor and a memory, the memory stores a program or instructions executable on the processor, and the program or the instructions are executed by the processor to implement steps of the method according to the first aspect.

According to a sixth aspect, a terminal is provided, including a processor and a communications interface. The communications interface is configured to obtain common beam information indicated by a network side device. The common beam information includes N first transmission configuration indicator TCI states. The first TCI state is a joint TCI state or a separate downlink DL TCI state. N is an integer greater than or equal to 1. The processor is configured to determine a target TCI state of a target downlink channel based on target information, where the target information includes at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel.

The first identification information includes at least one of the following:
identification information of a control resource set CORESET;
identification information of associated search spaces SS, where the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

According to a seventh aspect, a network side device is provided. The network side device includes a processor and a memory, the memory stores a program or instructions executable on the processor, and the program or the instructions are executed by the processor to implement steps of the method according to the third aspect.

According to an eighth aspect, a network side device is provided, including a processor and a communications interface. The communications interface is configured to indicate common beam information to a terminal. The common beam information includes N first transmission configuration indicator TCI states. The first TCI state is a joint TCI state or a separate downlink DL TCI state. N is an integer greater than or equal to 1. The processor is configured to determine a target TCI state of a target downlink channel based on target information, where the target information includes at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel.

The first identification information includes at least one of the following:
identification information of a control resource set CORESET;
identification information of associated search spaces SS, where the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

According to a ninth aspect, a wireless communications system is provided, and includes: a terminal and a network side device. The terminal may be configured to perform steps of the method for determining a downlink TCI state according to the first aspect, and the network side device may be configured to perform steps of the method for determining a downlink TCI state according to the third aspect.

According to a tenth aspect, a readable storage medium is provided. The readable storage medium stores a program or an instruction, and when the program or the instructions are executed by a processor, steps of the method according to the first aspect or steps of the method according to the third aspect are implemented.

According to an eleventh aspect, a chip is provided. The chip includes a processor and a communications interface, the communications interface is coupled to the processor, and the processor is configured to run a program or instructions to implement the method according to the first aspect or the third aspect.

According to a twelfth aspect, a computer program/program product is provided. The computer program/program product is stored in a storage medium, and the computer program/program product is executed by at least one processor to implement steps of the method for determining a downlink TCI state according to the first aspect or steps of the method for determining a downlink TCI state according to the third aspect.

In the embodiments of this application, the terminal obtains the common beam information indicated by the network side device and available for sharing or using by each channel; and even in a multi transmission reception point TRP scenario, the terminal can determine target TCI states of various downlink channels based on the target information without indicating a target TCI state of each channel based on a TCI state indication process corresponding to each channel. In the embodiments of this application, a unified TCI state indication framework may be used in the multi-TRP scenario, thereby simplifying the complexity of a TCI state indication or beam indication process of each downlink channel.

### BRIEF DESCRIPTION OF THE DRAWINGS

FIG. 1 is a schematic diagram of a structure of a wireless communications system to which embodiments of this application can be applied;
FIG. 2 is a flowchart of a method for determining a downlink TCI state according to an embodiment of this application;
FIG. 3 is a flowchart of another method for determining a downlink TCI state according to an embodiment of this application;
FIG. 4 is a schematic diagram of a structure of an apparatus for determining a downlink TCI state according to an embodiment of this application;
FIG. 5 is a schematic diagram of a structure of another apparatus for determining a downlink TCI state according to an embodiment of this application;
FIG. 6 is a schematic diagram of a structure of a communications device according to an embodiment of this application;
FIG. 7 is a schematic diagram of a hardware structure of a terminal according to an embodiment of this application; and
FIG. 8 is a schematic diagram of a structure of a network side device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that technologies described in the embodiments of this application are not limited to a Long Time Evolution (Long Time Evolution, LTE)/LTE-Advanced (LTE-Advanced, LTE-A) system, and may alternatively be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The described technologies can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6^{th} Generation, 6G) communications system.

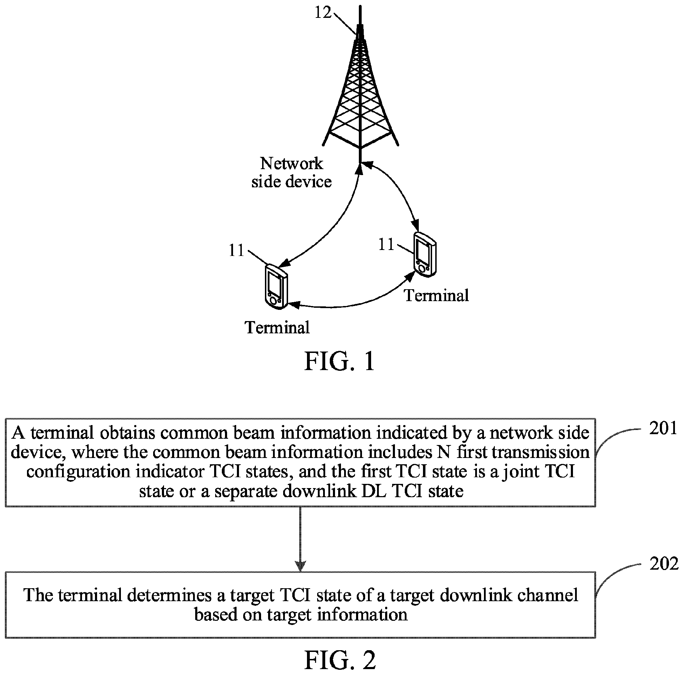

FIG. 1 is a block diagram of a wireless communications system to which embodiments of this application can be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (household devices with wireless communication functions, such as a refrigerator, a television, a washing machine, or furniture), a game console, a personal computer (personal computer, PC), a teller machine, or a self-service machine, and the wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, and the like. It should be noted that, a specific type of the terminal 11 is not limited in the embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a method for determining a downlink TCI state, an apparatus for determining a downlink TCI state, a terminal, and a network side device provided in the embodiments of this application are described in detail by using some embodiments and application scenarios thereof.

In wireless communication, after beam measurement and beam reporting, the network side device may perform beam indication for downlink and uplink channels or reference signals, to establish a beam link between the network side device and user equipment (User Equipment, UE, referred to as a terminal for short below), thereby implementing transmission of a channel or a reference signal.

It should be noted that beam information in the embodiments of this application may include at least one of the following: identification information of a beam, spatial relation (spatial relation) information, spatial domain transmission filter (spatial domain transmission filter) information, spatial domain reception filter (spatial domain reception filter) information, spatial filter (spatial filter) information, transmission configuration indicator state (TCI state) information, quasi colocation (Quasi colocation, QCL) information, and a QCL parameter. Downlink beam information may usually be represented by the TCI state information or the QCL information. Uplink beam information may usually be represented by the TCI state information or the spatial relation information.

In the related art, each channel or reference signal has a respective beam indication mechanism.
(1) Beam indication for a physical downlink control channel (Physical Downlink Control Channel, PDCCH): A network side device uses radio resource control (Radio Resource Control, RRC) signaling to configure K TCI states for each control resource set (Control Resource Set, CORESET). When K>1, a media access control control element (Media Access Control Control Element, MAC CE) indicates or activates one TCI state. When K=1, no additional MAC CE signaling is required. When UE monitors the PDCCH, same QCL is used for all search spaces (Search Spaces, SSs) in the CORESET, that is, a same TCI state is used to monitor the PDCCH. A reference signal (reference signal, for example, a periodic channel state information reference signal (Channel State Information Reference Signal, CSI-RS) resource (resource), a semi-persistent CSI-RS resource, or a synchronization signal block (Synchronization Signal Block, SSB)) in the TCI state is in spatial QCL with a demodulation reference signal (Demodulation Reference Signal, DMRS) port of a UE-specific (UE-specific) PDCCH. The UE may learn, based on the TCI state, a receiving beam to be used to receive the PDCCH.
(2) Beam indication for a physical downlink shared channel (Physical Downlink Share Channel, PDSCH): The network side device configures M TCI states by using RRC signaling, activates a TCI state corresponding to at most 8 codepoints (codepoints) by using MAC CE signaling, and then informs the TCI state by using a 3-bit TCI field (field) of downlink control information (Downlink Control Information, DCI). A referenceSignal in the TCI state is in QCL with a DMRS port of a PDSCH to be scheduled. The UE may learn, based on the TCI state, a receiving beam to be used to receive the PDSCH.
(3) Beam indication for a CSI-RS: When a type of the CSI-RS is a periodic CSI-RS, the network side device configures QCL information for a CSI-RS resource by using RRC signaling. When the type of the CSI-RS is a semi-persistent CSI-RS, when the network side device activates, by using MAC CE signaling, a CSI-RS resource from a CSI-RS resource set configured by using RRC, the network side device indicates QCL information of the CSI-RS resource. When the type of the CSI-RS is an aperiodic CSI-RS, the network side device configures QCL for a CSI-RS resource by using RRC signaling, and uses DCI to trigger the CSI-RS.
(4) Beam indication for a physical uplink control channel (Physical Uplink Control Channel, PUCCH): The network side device uses RRC signaling to configure spatial relation information (spatial relation information) for each PUCCH resource based on a parameter "PUCCH-SpatialRelationInfo". When there are a plurality pieces of spatial relation information configured for the PUCCH resource, a MAC CE is used to activate one piece of the spatial relation information. When there is only one piece of spatial relation information configured for the PUCCH resource, no additional MAC CE signaling is required.
(5) Beam indication for a physical uplink shared channel (Physical Uplink Shared Channel, PUSCH): For spatial relation information of the PUSCH, when DCI carried on a PDCCH schedules a PUSCH, each SRI codepoint of a sounding reference signal (Sounding Reference Signal, SRS) resource indicator (SRS resource indicator, SRI) field in the DCI indicates one SRI, and the SRI indicates the spatial relation information of the PUSCH.
(6) Beam indication for an SRS: When a type of the SRS is a periodic SRS, the network side device configures spatial relation information for the SRS resource by using RRC signaling. When the type of the SRS is a semi-persistent SRS, the network side device activates spatial relation information by using MAC CE signaling. When the type of the SRS is an aperiodic SRS, the network side device configures spatial relation information for the SRS resource by using RRC signaling, and may update the spatial relation information by using MAC CE signaling.

It may be learned from the above that in the related art, a target TCI state used by each type of channel or reference signal resource needs to be indicated through a beam indication process corresponding to the channel or the reference signal resource, so it can be learned that the beam indication process is complicated.

To simplify the beam indication process, a new TCI framework (framework) is introduced in a 3rd generation partnership project (3rd Generation Partnership Project, 3GPP) release (Release) 17 of 5G NR, and the frame may be referred to as a unified TCI framework (unified TCI framework). That is, a same beam (beam) indicated by the network side device by using a MAC CE and/or DCI may be used for transmission of a plurality of channels, and this beam may also be referred to as a common beam (common beam). The beam indication process of the unified TCI framework is as follows.

The network side device configures a TCI state pool (pool) by using RRC signaling, and activates one or more TCI states in the TCI state pool by using MAC CE signaling. When the MAC CE activates a TCI state corresponding to one codepoint, the activated TCI state is directly applied to a target signal. When the MAC CE activates TCI states corresponding to a plurality of codepoints respectively, the network side device uses a TCI field in DCI to indicate one codepoint, and a TCI state corresponding to the one codepoint is applied to a target signal.

The TCI in the unified TCI framework may include two modes: A joint (joint)TCI state and a separate (separate)TCI state, and the modes are configured by RRC signaling of the network side device. For the joint TCI state, each codepoint corresponds to one TCI state; and for the separate TCI state, each codepoint may correspond to one down link (Down Link, DL) TCI state and one up link (Up Link, UL) TCI state, one DL TCI state, or one UL TCI state.

A source (source) RS of the TCI state may be divided into the following two cases:
(1) DL: A CSI-RS for beam management (CSI-RS for beam management) and a CSI-RS for tracking (CSI-RS for tracking); and
(2) UL: An SSB, a CSI-RS for beam management, a CSI-RS for tracking, and an SRS for beam management (SRS for beam management).

A target signal of the TCI state may be divided into the following two cases:
(1) DL: UE-dedicated reception on PDSCH (UE-dedicated reception on PDSCH), UE-dedicated reception on all or subset of CORESETs (UE-dedicated reception on all or subset of CORESETs), aperiodic CSI-RS resources for CSI (Aperiodic CSI-RS resources for CSI), aperiodic CSI-RS resources for beam management (Beam Management, BM) (Aperiodic CSI-RS resources for BM), DMRS associated with non-UE-dedicated reception on CORESET, and DMRS(s) associated with non-UE-dedicated reception on CORESET(s) and the associated PDSCH (associated with the serving cell physical cell identifier (Physical Cell Identifier, PCI) (DMRS(s) associated with non-UE-dedicated reception on CORESET(s) and the associated PDSCH (associated with the serving cell PCI)); and
(2) UL: A dynamic grant/configuration-grant based PUSCH (dynamic grant/configuration-grant based PUSCH), all of dedicated PUCCH resources (all of dedicated PUCCH resources), aperiodic SRS resources or resource sets for BM (Aperiodic SRS resources or resource sets for BM), an SRS for antenna switching (SRS for antenna switching), an SRS for codebook (SRS for codebook), and an SRS for non-codebook (SRS for non-codebook).

In an implementation, a DCI format (formats) 1_1/1_2 with DL allocation and a DCI format 1_1/1_2 without DL allocation are supported when the network side device uses DCI for beam indication.

An effective time of the TCI state indicated by beam indication DCI (beam application time) is defined as: the first slot to apply the indicated TCI state is at least Y symbols after the last symbol of an acknowledgment of the joint or separate DL/UL beam indication (the first slot to apply the indicated TCI state is at least Y symbols after the last symbol of an acknowledgment of the joint or separate DL/UL beam indication).

A path loss RS (path loss RS, PLRS) in a power control parameter is configured in the TCI state or to be associated with the TCI state by the network side device. Another parameter in the power control parameter (for example, a parameter setting such as P0, alpha, and a close loop index) is configured to be associated with the TCI state by the network side device. The PUCCH, the PUSCH, and the SRS each may have a parameter setting (setting) associated with the TCI state or included in configuration information of each channel.

In a carrier aggregation (Carrier Aggregation, CA) scenario, a network indicates common QCL information (common QCL information) and/or a common UL TX spatial filter(s) across a set of configured component carriers (Component Carrier, CC) (common UL TX spatial filter(s) across a set of configured CCs).

It should be noted that, although the unified TCI framework is proposed in the 3GPP R17, it is only applicable to a single-TRP (single-TRP, sTRP) scenario, and is not applicable to multi-TRP (multi-TRP, mTRP) transmission introduced in a 3GPP R16. In other words, there is currently no scheme to apply the unified TCI framework to a downlink channel in the mTRP scenario. However, the embodiments of this application propose a scheme in which the unified TCI framework may be applied to a downlink channel in the mTRP scenario.

Refer to FIG. 2, a method for determining a downlink TCI state provided in an embodiment of this application may be executed by a terminal, and the terminal may be any terminal 11 listed in FIG. 1 or another type of terminal, which is not specifically limited herein. As shown in FIG. 2, the method for determining a downlink TCI state may include the following steps.

Step 201: A terminal obtains common beam information indicated by a network side device, where the common beam information includes N first transmission configuration indicator TCI states, the first TCI state is a joint TCI state or a separate downlink DL TCI state, and N is an integer greater than or equal to 1.

In an implementation, the first TCI state may be understood as an active TCI state that may be shared by all downlink channels, reference signal resources, or reference signal resource sets in the mTRP scenario, for example, the network side device configures a TCI state pool by using RRC signaling, and activates a TCI state corresponding to one or at least two codepoints by using MAC CE signaling. When a quantity of codepoints corresponding to the active TCI state is greater than 1, the network side device uses a TCI field in DCI to indicate at least some of the active TCI states as a first TCI state.

A multi-TRP scenario may be understood as that a network side device may have at least two TRPs, and different TRPs may include the same and/or different beams. In a transmission process, the network side device may communicate with the terminal via one or more of the at least two TRPs.

In an implementation, a quantity of the first TCI states may usually be two. Certainly, there may alternatively be one or more than two first TCI states. For ease of description, the following examples are usually described by taking the quantity of the first TCI states of two as a typical example. This is not specifically limited herein.

Step 202: The terminal determines a target TCI state of a target downlink channel based on target information.

The target information includes at least one of the following:
a quantity of the first TCI states;
an arrangement sequence or a location of the first TCI state;
a correspondence between the first TCI state and first identification information;
a type of the target downlink channel (for example, a PDSCH, a PDCCH, a DL RS resource, and the like);
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, where
the first identification information includes at least one of the following:
   identification information of a control resource set CORESET;
   identification information of associated search spaces SS, where the associated SSs are used for repetition transmission of a PDCCH;
   identification information of a CORESET in which the associated SSs are located;
   transmission occasion information or transmission time information of the associated SSs;
   a CORESET pool index (CORESETPoolIndex);
   identification ID information of a transmission reception point TRP;
   identification information of a channel group;
   identification information of a CORESET group; and
   identification information of a physical uplink control channel (Physical Uplink Control Channel, PUCCH) resource group.

In an implementation, the quantity of the first TCI states may be one or at least two, for example, in a scenario where the network side device has N TRPs, the network side device may indicate N first TCI states. In addition, the first TCI state may be a joint TCI state or a separate DL TCI state, which is not specifically limited herein.

In addition, the type of the target downlink channel may include: a physical downlink control channel (Physical Downlink Control Channel, PDCCH), a physical downlink shared channel (Physical Downlink Shared Channel, PDSCH), a DL RS resource, a PDCCH in a first CORESET, a channel scheduled or triggered by the PDCCH in the first CORESET, and a channel associated with the first CORESET; and
the first CORESET includes at least one of the following: a CORESET #0, a CORESET associated with only a common search space (Common Search Space, CSS), a CORESET associated with only a UE-specific search space (UE-specific Search Space, USS), and a CORESET associated with the USS and the CSS.

The PDCCH includes at least one of the following:
all PDCCHs, a PDCCH in a control resource set CORESET dedicated to the terminal, a PDCCH in the CORESET associated with only the USS, a PDCCH in the CORESET associated with only the CSS, a PDCCH in the CORESET associated with the USS and the common search space CSS, and a PDCCH in a CORESET other than the CORESET #0;
   and/or
the PDSCH includes at least one of the following:
a PDSCH scheduled by the PDCCH, a PDSCH associated with the PDCCH, and a PDSCH dedicated to the terminal.

In addition, the transmission mode of the target downlink channel may include: a repetition (repetition) transmission mode, multi-beam simultaneous transmission (for example, single frequency network (Single Frequency Network, SFN) transmission, frequency division multiplex (Frequency Division Multiplex, FDM) transmission/space division multiplex (Space Division Multiplex, SDM), and the like), a preset transmission mode (namely, a single-beam transmission mode without repetition) or a transmission mode in which the preset transmission mode, the repetition transmission mode, and the multi-beam simultaneous transmission mode are dynamically switched.

It should be noted that, in the following embodiments, for ease of description, the multi-beam simultaneous transmission mode is referred to as an SFN transmission mode. This is not specifically limited herein.

In an implementation, for target downlink channels in different types and/or transmission modes, quantities and types of TCI states required by the target downlink channels may also change, so that a quantity of first TCI states indicated by the network side device may be greater than, less than, or equal to a quantity of TCI states required by the target downlink channel.

Option 1: In a process of determining a target TCI state of the target downlink channel based on the quantity of the first TCI states, whether to update the TCI state of the target downlink channel and which TCI state to update may be decided depending on whether the quantity of the first TCI states is greater than or equal to the quantity of TCI states required by the target downlink channel, for example, when the quantity of the first TCI states is greater than or equal to K, where K is the quantity of TCI states required by the target downlink channel, at least K first TCI states may be used to determine beam information of the target downlink channel (namely, all TCI states of the target downlink channel are updated); and when the quantity of the first TCI states is less than K, the target downlink channel may use original TCI states (namely, the TCI state of the target downlink channel is not updated), or the target downlink channel may use some original TCI states and the first TCI state (namely, some TCI states of the target downlink channel are updated). Certainly, when the quantity of the first TCI states is less than K, it may also be determined that the target downlink channel stops transmission, or the transmission mode of the target downlink channel is switched to a transmission mode matching the quantity of the first TCI states (for example, if the quantity of first TCI states is equal to 1, the transmission mode of the target downlink channel is: the repetition transmission mode with two TCI states, or the multi-beam simultaneous transmission mode with FDM, SDM or SFN, then the terminal may determine that a configuration of the repetition transmission mode or the multi-beam simultaneous transmission mode is invalid, thereby changing the transmission mode of the target downlink channel to a single-beam transmission mode using only one TCI state).

Option 2: In a process of determining the target TCI state of the target downlink channel based on the arrangement sequence or the location of the first TCI state, a first TCI state arranged at a preset location (for example, the first location, the second location, and the like) may be determined as the target TCI state of the target downlink channel, for example, when the quantity of the first TCI states is at least two, and the target downlink channel needs to use two TCI states, the first TCI states arranged at the first location and the second location may be determined as the target TCI states of the target downlink channel.

In an implementation, when the network side device activates or indicates the first TCI state, the network side device indicates the TCI state by activating or indicating a TCI codepoint, and the TCI codepoint may correspond to one or more TCI states arranged in sequence. In this way, when the TCI codepoint corresponds to a plurality of TCI states, each TCI state has an arrangement sequence or an arrangement location.

Option 3: In a process of determining the target TCI state of the target downlink channel based on the correspondence between the first TCI state and the first identification information, a first TCI state corresponding to preset first identification information may be determined as the target TCI state of the target downlink channel. For example, a first TCI state corresponding to a preset value (which may be the smallest value) of CORESETPoolIndex may be determined as the target TCI state of the target downlink channel.

Option 4: In a process of determining the target TCI state of the target downlink channel based on the type of the target downlink channel, for different types of target downlink channels, the target TCI state may be determined based on a TCI state related to the channel type. For example, a target TCI state of a PDSCH or a DL RS resource is determined based on a TCI state of a PDCCH that schedules or triggers the PDSCH or the DL RS resource, or search spaces (Search Space, SS) that are associated with each other may be obtained in view of a PDCCH used for repetition transmission, so that a TCI state corresponding to identification information of the associated SSs, identification information of a CORESET in which the associated SSs are located, or transmission occasion information or transmission time information of the associated SSs is determined as the target TCI state of the PDCCH for repetition transmission.

Option 5: In a process of determining the target TCI state of the target downlink channel based on the transmission mode of the target downlink channel, the quantity of TCI states that the target downlink channel needs to use may be determined based on the transmission mode of the target downlink channel, so that the quantity of target TCI states may be determined.

Optionally, before the terminal determines a target TCI state of a target downlink channel based on target information, the method further includes:
receiving, by the terminal, third indication information from the network side device, and determining the transmission mode of the target downlink channel based on the third indication information, where the transmission mode includes: a preset transmission mode, the repetition transmission mode, the multi-beam simultaneous transmission mode, or a transmission mode in which the preset transmission mode, the repetition transmission mode, and the multi-beam simultaneous transmission mode are dynamically switched, where the preset transmission mode is non-repetitive single-beam transmission.

In this implementation, the network side device may be used to indicate the transmission mode of the target downlink channel. Further, the third indication information may be used to indicate the transmission mode of the target downlink channel, or the third indication information indicates the quantity of the target TCI states, where that the third indication information indicates the quantity of the target TCI states may be understood as indirectly indicating the transmission mode of the target downlink channel, for example, the network side device may use indication signaling for each PDCCH resource or PDCCH resource group to indicate whether to use only single TCI state transmission, multi-TCI state transmission, transmission of dynamically switching the quantity of TCI states, and other transmission modes. The indication signaling may be: explicitly indicating various transmission modes by using RRC, MAC CE, or DCI signaling, or indirectly indicating various transmission modes through a quantity of TCI states indicated by RRC, MAC CE, or DCI signaling. For example, if a quantity of repetitions configured by RRC is greater than 1, the multi-TCI state transmission is used; if the MAC CE activates a codepoint corresponding to a plurality of TCI states, the multi-TCI state transmission is used; and if the DCI indicates one or more TCI states, dynamic switching is implemented between single TCI state transmission and multi-TCI state transmission.

Optionally, in a case that the terminal uses single-beam transmission, if the quantity of the first TCI states is one, the terminal determines that the transmission mode of the target downlink channel is single-beam transmission (that is, the target downlink channel directly uses the first TCI state for single-beam transmission); or
in a case that the terminal uses single-beam transmission, if the quantity of the first TCI states is at least two, the terminal determines that the transmission mode of the target downlink channel is single-beam transmission (that is, the target downlink channel uses one of the at least two first TCI states for single-beam transmission), a repetition transmission mode, or a multi-beam simultaneous transmission mode (that is, the target downlink channel uses at least two or all of the at least two first TCI states for repetition transmission or multi-beam simultaneous transmission); or
in a case that the terminal uses the repetition transmission mode or the multi-beam simultaneous transmission mode, if the quantity of the first TCI states is one, the terminal determines that the transmission mode of the target downlink channel is single-beam transmission (that is, the target downlink channel directly uses the first TCI state for non-repetitive single-beam transmission), a repetition transmission mode (namely, the target downlink channel directly uses the first TCI state for repetition transmission, the target downlink channel uses at least two original TCI states for repetition transmission, or the target downlink channel uses some of the original TCI states and the first TCI state for repetition transmission), or a multi-beam simultaneous transmission mode (that is, the target downlink channel uses at least two original TCI states for multi-beam simultaneous transmission, or the target downlink channel uses some of the original TCI states and the first TCI state for multi-beam simultaneous transmission); or
in a case that the terminal uses a repetition transmission mode or a multi-beam simultaneous transmission mode, if the quantity of the first TCI states is at least two, the terminal determines that the transmission mode of the target downlink channel is the repetition transmission mode or the multi-beam simultaneous transmission mode (that is, the target downlink channel uses at least two or all of the at least two first TCI states for repetition transmission or multi-beam simultaneous transmission).

Option 6: In a process of determining the target TCI state of the target downlink channel based on a time-domain behavior of the target downlink channel or a time-domain behavior of information carried on the target downlink channel, it may be distinguished whether the time-domain behavior of the target downlink channel is periodic or aperiodic, or whether the time-domain behavior of the information carried on the target downlink channel is periodic or aperiodic, and then different target TCI states may be used for a periodic downlink channel and an aperiodic downlink channel, or different target TCI states may be used for a downlink channel carrying the periodic information and a downlink channel carrying the aperiodic information.

Optionally, in a case that the time-domain behavior of the target downlink channel is a periodic downlink channel, or the time-domain behavior of the carried information is periodic information, the target TCI state includes at least one of the following:
a TCI state other than the first TCI state in a TCI state pool or an original TCI state of the target downlink channel;
a first TCI state corresponding to the first identification information associated with the target downlink channel;
a first TCI state indicated by first indication information from the network side device; and
a first preset TCI state, where
the first preset TCI state includes at least one of the following:
   a first TCI state arranged at a preset location in all of the first TCI states; and
   a first TCI state corresponding to preset first identification information.

The first indication information may be RRC signaling sent by the network side device, for example, the first indication information may be located in RRC signaling carrying configuration information of the target downlink channel, or the first indication information may be included in the configuration information of the target downlink channel. Certainly, the first indication information may alternatively be carried in any form of signaling such as newly added RRC signaling, and MAC CE or DCI signaling, which is not specifically limited herein.

It should be noted that, in a case that the target downlink channel is a PDSCH or a DL RS resource, and the PDSCH or the DL RS is aperiodic, the target TCI state may be a TCI state of a PDCCH that schedules the PDSCH or the DL RS resource.

Option 7: In a process of determining a target TCI state of a target downlink channel based on a quantity of pieces of first identification information corresponding to the target downlink channel, the transmission mode of the target downlink channel may be determined based on the quantity of pieces of the first identification information corresponding to the target downlink channel, for example, a PDCCH configured in an SFN transmission mode may simultaneously correspond to two pieces of first identification information such as a channel group, a CORESET group, CORESETPoolIndex, or a TRP ID. In this case, two TCI states that are indicated by the network side device and that correspond to two pieces of first identification information may be applied to an SFN PDCCH.

Option 8: In a process of determining a target TCI state of a target downlink channel based on a value of first identification information corresponding to the target downlink channel, a TCI state corresponding to the value of the first identification information may be determined based on the correspondence between the first identification information and the TCI state.

In an implementation, the options 1 to 8 may be combined with each other, that is, the terminal may determine the target TCI state based on one or at least two of the options 1 to 8. For example, in a case that the first TCI state indicated by the network side device can meet requirements of the target downlink channel on the quantity of TCI states, channel types, associated first identification information, and the like, the terminal may select, based on target information, K first TCI states from the first TCI states indicated by the network side device as the target TCI states, where K is the quantity of TCI states required by the target downlink channel.

As an optional implementation, in a case that the quantity of the first TCI states is greater than K, where K is a quantity of TCI states required by the target downlink channel, the determining, by the terminal, a target TCI state of a target downlink channel based on target information includes:
determining, by the terminal, that K first TCI states arranged at preset locations are the target TCI states of the target downlink channel; or
determining, by the terminal, the target TCI state of the target downlink channel based on an indication of second indication information from the network side device, where the second indication information indicates K first TCI states.

The K first TCI states arranged at the preset locations may be understood as: after at least two first TCI states indicated by the network side device are arranged in a preset sequence, a preset location of each first TCI state is determined based on an arrangement location of each first TCI state, or each first TCI state is corresponding to a preset location identifier.

In this way, the terminal may determine the preset location according to a default rule, such as: a TCI state at the preset location is determined to be a TCI state arranged at the first place. Certainly, in an implementation, the network side device may also indicate the preset location to the terminal, so that a first TCI state corresponding to the preset location may be determined after the preset location is determined.

In an implementation, the preset sequence or location of the TCI state may be determined based on sequences or locations of a plurality of TCI states corresponding to a TCI codepoint when a MAC CE activates a TCI state, or determined when DCI indicates a TCI state, which is not specifically limited herein.

In addition, that the terminal determines the target TCI state of the target downlink channel based on an indication of second indication information from the network side device may be understood as that the terminal receives the second indication information from the network side device, so that the network side device indicates, to the terminal, a specific TCI state or states used by the target downlink channel.

It should be noted that, in a case that the target TCI state includes at least two first TCI states, in addition to indicating which two first TCI states are, the second indication information may also indicate first TCI states respectively corresponding to the two TCI states of the target downlink channel. For example, in a case that the quantity of the first TCI states is two, and the target downlink channel uses the repetition transmission mode, if the second indication information is 00, the first of the two first TCI states may be selected for repetition transmission of the target downlink channel; if the second indication information is 01, the second of the two first TCI states may be selected for repetition transmission of the target downlink channel; if the second indication information is 10, the first of the two first TCI states is selected as the first TCI state for repetition transmission of the target downlink channel, and the second of the two first TCI states is selected as the second TCI state for repetition transmission of the target downlink channel; and if the second indication information is 11, the second of the two first TCI states is selected as the first TCI state for repetition transmission of the target downlink channel, and the first of the two first TCI states is selected as the second TCI state for repetition transmission of the target downlink channel.

In comparison with an implementation in which the terminal determines that K first TCI states arranged at preset locations are the target TCI states of the target downlink channel, in this implementation, the network side device can flexibly configure which TCI state or states are specifically used by the target downlink channel of the terminal.

Optionally, the second indication information is carried in a first signaling field, and the first signaling field is a signaling field in media access control MAC control element CE signaling or DCI signaling.

In an implementation, the first signaling field may be a signaling field in MAC CE signaling for activating the first TCI state or spatial relationship information.

In another implementation, the first signaling field may alternatively be a signaling field in DCI signaling for indicating the first TCI state.

In an implementation, the first signaling field is applicable to a DCI format 1_1 or a DCI format 1_2.

In this implementation, the second indication information may be carried by using a signaling field newly added in the existing MAC CE signaling or DCI signaling, to reduce a signaling overhead.

It should be noted that, in an implementation, a first signaling field may be configured to exist or take effect only when the second indication information is required, while in other unnecessary cases, the first signaling field may not be configured or be configured but the configuration does not take effect. For example, the first signaling field takes effect or exists when a preset condition is met, and the preset condition includes at least one of the following:
the network side device configures the first signaling field;
the network side device indicates at least two first TCI states by using DCI signaling; and
at least one of TCI codepoints activated by the network side device by using a media access control MAC control element CE corresponds to at least two TCI states.

In this implementation, whether to configure the first signaling field or whether to configure the first signaling field to take effect may be determined based on a preset condition, so that the terminal may detect second indication information carried in the first signaling field only when the first signaling field is configured and the first signaling field takes effect, and a computing power and resource consumption of the terminal can be reduced.

Certainly, in an implementation, there may be cases where the first TCI state indicated by the network side device cannot meet requirements of the target downlink channel on the quantity and types of TCI states, associated first identification information, and the like. In this case, that the terminal determines the target TCI state of the target downlink channel based on the target information may include at least one of the following: the terminal may determine that the target downlink channel uses an original TCI state (namely, not updating the TCI state of the target downlink channel), update only one or some of original TCI states of the target downlink channel to the first TCI state(s), stop performing transmission on the target downlink channel based on the original configuration information of the target downlink channel (for example, repetition transmission or SFN transmission), or the like.

In an optional implementation, in a case that the target downlink channel has M TCI states, if the quantity of the first TCI states is at least M, the target TCI states are at least M of the first TCI states, and M is an integer greater than or equal to 2;
in a case that the target downlink channel has M TCI states, if N is less than M, the target TCI states are M original TCI states of the target downlink channel, or the target TCI states are (M-N) original TCI states of the target downlink channel and the N first TCI states, or the target TCI states are the N first TCI states; or
in a case that the target downlink channel has one TCI state, if the quantity of the first TCI states is at least one, the target TCI state is at least one first TCI state.

In a case that the target downlink channel has M TCI states, if N is less than M, the target TCI states are M original TCI states of the target downlink channel, and the TCI state of the target downlink channel may not be updated.

In a case that the target downlink channel has M TCI states, if N is less than M, the target TCI states are (M-N) original TCI states of the target downlink channel and the N first TCI states, only N TCI states among the M original TCI states of the target downlink channel are updated, and remaining (M-N) TCI states are not updated.

In a case that the target downlink channel has M TCI states, if N is less than M, the target TCI states are the N first TCI states. This indicates that when the target downlink channel uses two downlink TCI states for transmission (for example, repetition transmission or SFN transmission), if the quantity of the first TCI states is one, it may be determined that the repetition configuration or the SFN configuration is invalid, so as to continue repetition transmission of the target downlink channel by using one first TCI state, transmit the target downlink channel by using one first TCI state, or stop transmitting the target downlink channel.

In an optional implementation, in a case that the quantity of the first TCI states is greater than 1, if the type of the target downlink channel is a PDCCH, and the transmission mode is a repetition transmission mode, the target TCI state includes at least one of the following:
a first TCI state corresponding to same first identification information as first SSs, where the first SSs are at least two associated SSs in which the target downlink channel is located; or
all of the first TCI states, where each of the first TCI states is applied, based on the correspondence between the first TCI state and the first identification information, to the target downlink channel transmitted on the associated SSs.

In this implementation, the repetition transmission mode used by the target downlink channel may be: repetition of a CORESET #0, a CORESET associated with only a CSS, a CORESET associated with only a USS, CORESET associated with the USS and the CSS, a PDCCH in this type of CORESET, and another channel scheduled by the PDCCH.

In an implementation, when the target downlink channel is a PDCCH, in a case of repetition of the PDCCH, the network side device may configure two SS sets in which the PDCCH is located to be associated with each other.

In an implementation, multi-TRP transmission may be divided into single DCI scheduling (sDCI) and multi-DCI (mDCI) scheduling based on control signaling.

Multi-DCI (multi-DCI, mDCI) scheduling: Each TRP sends a respective PDCCH, and each PDCCH schedules a respective own PDSCH. In this case, a plurality of CORESETs configured for UE are associated with different RRC parameters, namely, CORESETPoolIndex, so as to use CORESETPoolIndex to correspond to different TRPs. In this case, PDSCHs scheduled by two TRPs may completely overlap, partially overlap, or not overlap, and PUSCHs scheduled by two TRPs respectively cannot overlap.

Single DCI (single DCI, sDCI) scheduling: One TRP sends a PDCCH to schedule a PDSCH. In this case, a plurality of CORESETs configured for UE cannot be associated with different pieces of CORESETPoolIndex. In this case, a MAC CE activates at most 8 codepoints (codepoint), of which at least one codepoint corresponds to two TCI states. When a codepoint indicated by a TCI field in one piece of DCI corresponds to two TCI states and indicates that one TCI state includes "QCL-TypeD", it indicates that the scheduled PDSCH comes from two TRPs, and the PDSCH includes a plurality of transmission schemes, such as: data at different layers of PDSCH corresponds to two TCI states (a scheme 1a, space division multiplexing (Space Division Multiplexing, SDM)); or data on subcarriers in different frequency domains corresponds to two TCI states (a scheme 2a/2b, frequency division multiplex (Frequency Division Multiplex, FDM)); or all time domain repetitions come from different TRPs (a scheme 3/4, time division multiplexing (Time Division Multiplexing, TDM)). A specific transmission scheme of the PDSCH is determined by other manners, for example, a quantity of DMRS code division multiplexing (Code Division Multiplexing, CDM) groups is configured by a higher-layer parameter or indicated by DCI. Details are not described herein again.

It is worth mentioning that in the related technology, 3GPP R17 supports a PDCCH repetition transmission scheme in an mTRP scenario, and this scheme can only be applied to sDCI scheduling.

Specifically, in a beam indication scheme of PDCCH repetition transmission in the mTRP scenario, the network side device explicitly configures two search space sets (search space set, SS set) in which the PDCCH is located to be associated with each other by using RRC signaling, and the associated SS sets may be associated with a same CORESET or different CORESETs. In addition, whether TCI states of CORESETs associated with two associated SS sets are the same is not limited.

In addition, the beam indication scheme of PDCCH repetition transmission in the mTRP scenario further has the following limiting conditions:
UE does not expect the third monitored SS set to be associated with any of the two associated SS sets;
two associated SS sets have a same period, offset, duration, a quantity of monitoring occasions, AL, and the like;
the n^{th} monitoring occasion (monitoring occasion) of one SS set is associated with the n^{th} monitoring occasion of another SS set, and two candidate (candidate) PDCCHs have a same candidate index (candidate index);
inter-slot PDCCH repetition is not supported;
the SS sets may only be a USS and a Type3 CSS; and
an SS set configured for an RRC parameter "recovery SearchSpaceId" is not associated with other SS sets.

In this embodiment of this application, the PDCCH repetition transmission scheme in the mTRP scenario may be applied to sDCI scheduling and mDCI scheduling.

Optionally, in a multi-DCI mode, CORESETs in which the at least two associated SSs are located are in different pieces of CORESETPoolIndex; and in a single-DCI mode, the at least two associated SSs correspond to different pieces of the first identification information.

Scheme 1: When the mDCI mode in the mTRP scenario (for example, two pieces of CORESETPoolIndex are configured), SSs in CORESETs corresponding to different pieces of CORESETPoolIndex are configured to be associated. A plurality of TCI states indicated by the network side device respectively correspond to pieces of CORESETPoolIndex thereof (for example, corresponding to CORESETPoolIndex in a preset sequence or location of a TCI state). In this way, when being transmitted on the associated SSs, the PDCCH uses a TCI state corresponding to the same CORESETPoolIndex as the SSs.

Scheme 2: In a case of the sDCI mode of the mTRP scenario, the first identification information may be an identifier of a channel group or a CORESET group, that is, the network side device divides signals or CORESETs into groups, and configures SSs in CORESETs from different groups to be associated with each other. In addition, the first TCI state indicated by the network side device is also in a one-to-one correspondence with a group identifier (for example, corresponding to group identifiers respectively in a preset sequence or location of the TCI state). Therefore, when the PDCCH is transmitted on the associated SSs, transmission information of the PDCCH may be determined by using a TCI state corresponding to a same group identifier as the SSs (for example, beam information).

In other words, before the terminal determines a target TCI state of a target downlink channel based on the first TCI state, the method further includes:
receiving, by the terminal, first configuration information from the network side device, where
the first configuration information is used to configure SSs in CORESETs corresponding to different pieces of the first identification information to be associated with each other.

In an implementation, the terminal may determine, based on the first configuration information, that the target downlink channel is a PDCCH for repetition transmission, and determine a target TCI state based on first identification information configured as being corresponding to the associated SSs, that is, a first TCI state corresponding to a same first identifier as the associated SSs is applied to the target downlink channel transmitted on the associated SSs.

Scheme 3: The target TCI state includes all of the first TCI states, where each of the first TCI states is applied, based on the correspondence between the first TCI state and the first identification information, to the target downlink channel transmitted on the associated SSs. This may be: at least two first TCI states indicated by a network are applied, based on a preset correspondence, to the PDCCH transmitted on the associated SSs. The preset correspondence may be: The arrangement sequence or the location of the first TCI state corresponds to an ID of the associated SSs, the arrangement sequence or the location of the first TCI state corresponds to an ID of a CORESET in which the associated SSs are located, the arrangement sequence or the location of the first TCI state corresponds to a monitoring occasion/transmission time sequence of the associated SSs, or the like, which is not specifically limited herein.

In this implementation, a unified TCI state that may be applied to sDCI scheduling and mDCI scheduling in the mTRP scenario is provided.

In an optional implementation, in a case that the quantity of the first TCI states is equal to 1, if the type of the target downlink channel is a PDCCH, and the transmission mode is a repetition transmission mode, that the terminal determines a target TCI state of a target downlink channel based on target information includes at least one of the following:
determining, by the terminal, that a repetition transmission configuration of the target downlink channel is invalid;
determining, by the terminal, one of the at least two associated SSs in which the target downlink channel is located, to transmit the target downlink channel;
determining, by the terminal, one of at least two CORESETs corresponding to the at least two associated SSs in which the target downlink channel is located, to transmit the target downlink channel;
determining, by the terminal, to perform PDCCH repetition transmission based on the first TCI state;
determining, by the terminal, that the target TCI state includes at least two original TCI states of the target downlink channel; and
determining, by the terminal, to update a second preset TCI state in the at least two original TCI states of the target downlink channel to the first TCI state, where the second preset TCI state corresponds to the same first identification information as the first TCI state; the second preset TCI state is one of the at least two original TCI states of the target downlink channel that is at a preset location; or the second preset TCI state is associated with the first TCI state.

In this implementation, if the target downlink channel is a PDCCH in the repetition transmission mode, and the repetition PDCCH originally uses two TCI states, when the network indicates one first TCI state, the following manners may be used:
(1) the PDCCH repetition configuration is invalid, that is, repetition=1, or the PDCCH is not sent again;
(2) the PDCCH is transmitted by using one preset SS of two associated SSs in which the PDCCH is located, or the PDCCH is transmitted by using one preset CORESET of two CORESETs of two associated SSs in which the PDCCH is located. The preset SS or the preset CORESET refers to: a minimum or maximum SS ID or CORESET ID, or an SS or CORESET corresponding to one TCI state indicated by a network (for example, a TCI state corresponds to one channel group/CORESET group/TRP ID/CORESETPoolIndex, while the preset SS or the preset CORESET belongs to the channel group /CORESET group/TRP ID/CORESETPoolIndex);
(3) continue PDCCH repetition by using one TCI state indicated by the network;
(4) the PDCCH for repetition does not update the TCI state, that is, two original TCI states are still used; and
(5) a second preset TCI state in the two original TCI states of the PDCCH for repetition is updated to one first TCI state indicated by the network side device, where the second preset TCI state and one first TCI state indicated by the network side device correspond to a same channel group/CORESET group/TRP ID/CORESETPoolIndex, or the second preset TCI state is one of the two original TCI states of the PDCCH for repetition (for example, the first TCI state), or the second preset TCI state corresponds to one first TCI state indicated by the network side device.

In this implementation, the problem of how to determine beam information or transmission information of the PDCCH in the repetition transmission mode in a case that the quantity of first TCI states indicated by the network side device is less than the quantity of TCI states configured for the PDCCH in the repetition transmission mode is solved.

In the related art, 3GPP R17 also supports transmission schemes of PDCCH SFN and PDSCH SFN. Processes of the transmission schemes of PDCCH SFN and PDSCH SFN are as follows.

The network side device configures the SFN transmission scheme of PDCCH or PDSCH by using RRC signaling. The PDCCH can only be monitored on a USS or Type3 CSS.

The network side device may activate two TCI states by using MAC CE signaling for the PDCCH to use two beams for SFN transmission.

The SFN transmission scheme includes scheme 1 (UE advanced receiver) and pre-compensation. The SFN PDCCH (scheme 1) may schedule a sTRP PDSCH (UE capability), the SFN PDCCH (scheme 1, pre-compensation) may schedule an SFN PDSCH (scheme 1 or pre-compensation, and the two modes are in a one-to-one correspondence with scheduling), a sTRP PDCCH (associated with only USS or CSS type3) may schedule a sTRP PDSCH (legacy) or an SFN PDSCH (scheme1+pre-compensation), and a sTRP PDCCH associated with CSS or CSS+USS may schedule the sTRP PDSCH. However, the SFN PDCCH cannot schedule a PDSCH transmission scheme in 3GPP R16.

In an optional implementation, in a case that the quantity of the first TCI states is greater than 1, if the transmission mode of the target downlink channel is a multi-beam simultaneous transmission mode, the target TCI state includes at least one of the following:
at least two first TCI states of a CORESET in which the target downlink channel is located;
at least two first TCI states corresponding to at least two pieces of the first identification information;
at least two TCI states of the target downlink channel that are determined based on the arrangement sequence or the location of the first TCI state;
all of the first TCI states; and
a first TCI state corresponding to a first PDCCH, where the first PDCCH includes: a PDCCH that schedules the target downlink channel, a PDCCH that schedules the target downlink channel and that is in a multi-beam simultaneous transmission mode, any PDCCH, or any PDCCH in a multi-beam simultaneous transmission mode.

In an implementation, that the transmission mode of the target downlink channel is a multi-beam simultaneous transmission mode may include at least one of the following: a PDCCH SFN, a PDSCH SFN, a PDCCH in a first CORESET and another channel SFN scheduled by the PDCCH, where the first CORESET includes at least one of the following: a CORESET #0, a CORESET associated with only a CSS, or a CORESET associated with a USS and a CSS.
1. For a PDCCH SFN, if the network side device indicates two first TCI states, a target TCI state of the SFN PDCCH may be determined based on at least one of the following schemes.

Scheme 1: For a PDCCH configured to be in the SFN transmission mode, two TCI states of a CORESET in which the PDCCH is located are two first TCI states indicated by the network side device.

Scheme 2: A PDCCH configured to be in the SFN transmission mode may simultaneously correspond to two channel groups/CORESET groups/TRP IDs/pieces of CORESETPoolIndex. In this case, two first TCI states that correspond to the two channel groups/CORESET groups/TRP IDs/pieces of CORESETPoolIndex and that are indicated by the network side device may be applied to the SFN PDCCH.

Scheme 3: The two first TCI states indicated by the network side device are two TCI states of the SFN PDCCH based on a preset correspondence. The preset correspondence may be: the two first TCI states indicated by the network side device and the two TCI states of the SFN PDCCH have corresponding arrangement sequences or locations.

Optionally, in a case that the target TCI state includes at least two first TCI states, the method further includes:
determining, by the terminal, a QCL parameter of the target downlink channel based on a target parameter, where the target parameter includes all QCL parameters of a fourth preset TCI state in the at least two first TCI states and an average delay parameter and a delay spread parameter of QCL-TypeA parameters of a TCI state other than the fourth preset TCI state in the at least two first TCI states.

In this implementation, when the PDCCH in the SFN transmission mode uses two first TCI states indicated by the network side device, QCL parameters of a QCL-TypeA type associated with one of the first TCI states (that is, a TCI state other than a fourth preset TCI state) may not be all referenced, but only average delay and delay spread parameters are referenced. In this way, a conflict of QCL parameters may be avoided, to improve reliability of QCL parameters of the PDCCH in the SFN transmission mode.

QCL sources corresponding to the two first TCI states may be two tracking reference signals (Tracking Reference Signal, TRS) or CSI-RSs.

2. For a PDSCH SFN, if the network side device indicates two first TCI states, a target TCI state of the SFN PDSCH may be determined based on at least one of the following schemes.

Scheme 1: For a PDSCH configured to be in the SFN transmission mode, two TCI states are two first TCI states indicated by the network side device.

Scheme 2: A PDSCH configured to be in the SFN transmission mode may simultaneously correspond to two channel groups/CORESET groups/TRP IDs/pieces of CORESETPoolIndex, and two first TCI states that correspond to the two channel groups/CORESET groups/TRP IDs/pieces of CORESETPoolIndex and that are indicated by the network side device are applied to the SFN PDSCH.

Scheme 3: The two first TCI states indicated by the network side device are two TCI states of the SFN PDSCH based on a preset correspondence. The preset correspondence may be: the two first TCI states indicated by the network side device and the two TCI states of the SFN PDCCH have corresponding arrangement sequences or locations.

Scheme 4: A TCI state of the first PDCCH is always used. The first PDCCH may be: a PDCCH that schedules the PDSCH, a PDCCH that schedules the PDSCH and that is for SFN transmission, any PDCCH, or any PDCCH that is for SFN transmission.

In an implementation, if a PDCCH is for SFN transmission, the SFN PDCCH may indicate two TCI states for the SFN PDSCH.

It should be noted that, the PDSCH in the SFN transmission mode uses two first TCI states indicated by the network side device, QCL parameters of a QCL-TypeA type associated with one of the first TCI states may not be all referenced, but only average delay and delay spread parameters are referenced. QCL sources corresponding to the two first TCI states may be two TRSs or CSI-RSs.

3. When a PDCCH in the first CORESET and another channel scheduled by the PDCCH are in the SFN transmission mode, if the network side device indicates two first TCI states, target TCI states of the PDCCH in the first CORESET and another channel scheduled by the PDCCH may be determined in a same manner as determining a target TCI state of an SFN PDCCH. Details are not described herein again.

In addition, it is also possible for the PDCCH in the first CORESET and another channel scheduled by the PDCCH to be used for repetition (repetition) transmission. In this case, target TCI states of the PDCCH in the first CORESET and another channel scheduled by the PDCCH may alternatively be determined in a same manner as determining a target TCI state of a PDCCH for repetition. Details are not described herein again.

In an implementation, the first CORESET only performs repetition and SFN transmission in an intra-cell (intra-cell) scenario. In addition, the PDCCH in the first CORESET and another channel scheduled by the PDCCH may not be allowed for repetition and SFN transmission modes. In this case, the PDCCH in the first CORESET and another channel scheduled by the PDCCH always use only a preset TCI state in the two first TCI states indicated by the network side device.

The preset TCI state may be at least one of the following:
a first TCI state that is at a preset location and that is corresponding to a codepoint indicated by the network side device through a TCI field on DCI, such as a first TCI state arranged at the first (first) place.

If the network side device indicates N joint TCI states/separate DL TCI states through a TCI field on DCI, a first TCI state corresponding to a preset channel group/CORESET group/TRP ID CORESETPoolIndex among the N joint TCI states/separate DL TCI states may be used; and
a first TCI state corresponding to a channel group/CORESET group/TRP ID CORESETPoolIndex in which the PDCCH is located among the N joint TCI states/separate DL TCI states.

It should be noted that, the foregoing schemes for the preset TCI state may only be applied to the intra-cell scenario, and when the PDCCH in the first CORESET and another channel scheduled by the PDCCH configured for the network side device may use a TCI state same as that of a UE-dedicated channel:
in the inter-cell (intra-cell) scenario, the preset TCI state may alternatively be a first TCI state associated with a physical cell identifier (Physical Cell Identifier, PCI) of a serving cell (serving cell) in the two first TCI states indicated by the network side device. It may even be further limited that the PDCCH in the first CORESET and another channel scheduled by the PDCCH cannot be used for repetition and SFN transmission only in the inter-cell scenario.

In an optional implementation, in a case that the quantity of the first TCI states is equal to 1, if the transmission mode of the target downlink channel is a multi-beam simultaneous transmission mode, that the terminal determines a target TCI state of a target downlink channel based on target information includes at least one of the following:
determining, by the terminal, that a multi-beam simultaneous transmission configuration of the target downlink channel is invalid;
determining, by the terminal, that the target downlink channel performs transmission based on the first TCI state;
determining, by the terminal, that the target downlink channel performs transmission based on the first TCI state;
determining, by the terminal, that the target TCI state includes at least two original TCI states of the target downlink channel; and
determining, by the terminal, to update a third preset TCI state in the at least two original TCI states of the target downlink channel to the first TCI state, where the third preset TCI state corresponds to the same first identification information as the first TCI state; the third preset TCI state is one of the at least two original TCI states of the target downlink channel that is at a preset location; or the third preset TCI state is associated with the first TCI state.

This implementation is similar to the implementation of how to determine beam information or transmission information by the PDCCH in the repetition transmission mode when the first TCI state is a joint TCI state or a separate DL TCI state, but a difference is that in this implementation, the SFN transmission mode cannot be realized by using one TCI state, and only one first TCI state indicated by the network side device is allowed to be used for transmitting the PDCCH in a conventional single-beam transmission mode. Other implementations are similar to the implementations (4) and (5) of how to determine beam information or transmission information by the PDCCH in the repetition transmission mode when the first TCI state is a joint TCI state or a separate DL TCI state, and details are not described herein again.

In an optional implementation, in a case that the type of the target downlink channel is a PDCCH, and the transmission mode is a preset transmission mode, the target TCI state includes a fifth preset TCI state, where the fifth preset TCI state includes at least one of the following:
a first TCI state arranged at a preset location in all of the first TCI states;
a first TCI state corresponding to preset first identification information;
a first TCI state corresponding to the first identification information associated with the target downlink channel; and
a first TCI state indicated by the network side device from all of the first TCI states.

In an implementation, the preset transmission mode specifically refers to a single-beam transmission mode of non-repetitive transmission. That is, the PDCCH in the preset transmission mode may be used for conventional single-beam PDCCH transmission without repetition and SFN, and may be sent by only one TRP.

Scheme 1: A first TCI state arranged at a preset location in all of the first TCI states may be at least one first TCI state arranged at any location such as the first place, the second place, the last place, or the like. The preset location may be determined based on one or more of manners such as protocol agreement, being the first place by default, being updated by the network side device, and the like, which is not specifically limited herein.

Scheme 2: The preset first identification information may be a preset channel group, a preset CORESET group, or a preset TRP ID (CORESETPoolIndex), for example, the first channel group, the first CORESET group, or the first TRP ID. In an implementation, the preset first identification information may be determined by one or more of manners such as protocol agreement, being the first place by default, being updated by the network side device, and the like, which is not specifically limited herein.

Scheme 3: For a first TCI state corresponding to the first identification information associated with the target downlink channel, if first TCI states indicated by the network side device are N joint TCI states/separate DL TCI states, the target TCI state may be, among the N joint TCI states/separate DL TCI states, a TCI state corresponding to a channel group/CORESET group/TRP ID (CORESETPoolIndex) in which the target downlink channel is located.

Scheme 4: A first TCI state indicated by the network side device from all of the first TCI states may be understood as: in addition to indicating at least two first TCI states, the network side device further indicates one or at least two of the at least two first TCI states. For example, the network side device further indicates the target TCI state among the at least two first TCI states through the second indication information, and for a meaning and function of the second indication information, refer to an explanation of the second indication information in the foregoing embodiment. Details are not described herein again.

In this implementation, a first TCI state that may be shared by a plurality of types of channels or reference signal resources in a unified TCI framework may be applied to a PDCCH in a preset transmission mode.

In an optional implementation, in a case that the quantity of the first TCI states is greater than 1, if the type of the target downlink channel is a PDSCH or a DL RS resource, the target TCI state includes at least one of the following:
all of the first TCI states;
at least one first TCI state indicated by the network side device from all of the first TCI states; and
a sixth preset TCI state, where
the sixth preset TCI state includes at least one of the following:
   a first TCI state corresponding to a first codepoint or at least one of first TCI states corresponding to the first codepoint, where the first codepoint is a codepoint indicated by a TCI field in DCI indicating the first TCI state;
   a first TCI state corresponding to preset first identification information;
   a first TCI state that is the same as a TCI state of a PDCCH on which DCI that schedules the target downlink channel is located;
   a first TCI state corresponding to first identification information associated with a PDCCH on which DCI that schedules the target downlink channel is located;
   a first TCI state corresponding to the first identification information associated with the target downlink channel;
   a first TCI state that is determined based on a second codepoint indicated by the network side device and that is dedicated to the target downlink channel, where the second codepoint is a codepoint indicated by a TCI field in DCI that schedules the target downlink channel, and the first TCI state corresponding to the second codepoint is a subset or a full set of the first TCI state corresponding to the first codepoint; and
   a first TCI state that is the same as that of a PDCCH for repetition transmission or multi-beam simultaneous transmission, or at least one of first TCI states of the PDCCH for repetition transmission or multi-beam simultaneous transmission, where the PDCCH for the repetition transmission or the multi-beam simultaneous transmission is a PDCCH on which DCI indicating the first TCI state is located, or a PDCCH that schedules the target downlink channel.

Scheme 1: That the target TCI states include all of the first TCI states indicates that when the network side device indicates N joint TCI states/separate DL TCI states, beam information of a PDSCH or a DL RS resource is determined always by using the N joint TCI states/separate DL TCI states indicated by the network side device.

Scheme 2: At least one first TCI state indicated by the network side device from all of the first TCI states may be understood as: in addition to indicating at least two first TCI states, the network side device further indicates one or at least two of the at least two first TCI states. For example, the network side device further indicates the target TCI state among the at least two first TCI states through the second indication information, and for a meaning and function of the second indication information, refer to an explanation of the second indication information in the foregoing embodiment. Details are not described herein again.

Scheme 3: Using a sixth preset TCI state, where the sixth preset TCI state may include at least one of the following:
used to indicate a TCI state at a preset location that is in a first TCI state corresponding to a first codepoint indicated by a TCI field on DCI (for example, a first TCI state);
a first TCI state that is the same as a TCI state of a PDCCH on which DCI that schedules the target downlink channel is located;
a TCI state corresponding to a channel group/CORESET group/TRP ID (CORESETPoolIndex) to which a PDCCH on which DCI that schedules the target downlink channel is located belongs;
using a first TCI state corresponding to the channel group/TRP ID (CORESETPoolIndex) to which the target downlink channel belongs;
in the DCI that schedules the target downlink channel, a TCI state corresponding to a codepoint indicated by a TCI field is one of N TCI states. Further, the TCI state is only used for the PDSCH. For example, if a first codepoint is codepoint1, a second codepoint is codepoint2, and codepoint1 indicated by the network side device corresponds to {TCI state 1, TCI state 2}, when a PDSCH is scheduled, the network side device uses DCI to indicate codepoint2 (corresponding to a TCI state 1 or a TCI state 2). However, the TCI state corresponding to codepoint2 is not used for another channel, and other channels still use codepoint1;
each first TCI state may correspond to a respective first identification information, for example, a channel group, a CORESET group, a TRP ID, or the like. The preset first identification information may be the first channel group/the first CORESET group/the first TRP ID, or the like, or first identification information of another preset sequence or location such as the second channel group/the second CORESET group/the second TRP ID, or the like. In this case, it may be determined that a first TCI state corresponding to first identification information in the preset sequence or location is the target TCI state; and
if a PDCCH on which DCI that indicates the first TCI state or DCI that schedules the target downlink channel is located is in the repetition transmission mode, the target downlink channel may use a TCI state the same as that of the PDCCH (further, a beam information determining scheme the same as that of the PDCCH may be used), or use at least one default TCI state among TCI states used for PDCCH repetition transmission.

Through the foregoing implementation, a unified TCI framework that is indicated by the network side device and that may be used in the mTRP scenario may be applied to a target downlink channel such as a PDSCH or a DL RS resource.

It is worth mentioning that in an implementation, there is also a case in which the network side device only indicates one first TCI state, for example, the network side device indicates one joint TCI state or one separate DL TCI state as the first TCI state. In this case, beam information determining schemes of various downlink channels are as follows.

In an optional implementation, in a case that the quantity of the first TCI states is equal to 1, if the type of the target downlink channel is a PDSCH or a DL RS resource, that the terminal determines a target TCI state of a target downlink channel based on target information includes at least one of the following:
in a case that the target downlink channel corresponds to the same first identification information as the first TCI state, determining, by the terminal, that the target TCI state includes the first TCI state;
in a case that the target downlink channel and the first TCI state correspond to different pieces of the first identification information, determining, by the terminal, that the target TCI state includes an original TCI state of the target downlink channel or determining that the target downlink channel stops transmission;
determining, by the terminal, that the target TCI state includes a TCI state of a PDCCH that schedules or triggers the target downlink channel; and
in a case that the target downlink channel has at least two original TCI states, determining, by the terminal, the target TCI state as: the at least two original TCI states of the target downlink channel or the first TCI state, or determining, by the terminal, to update a seventh preset TCI state in the at least two original TCI states of the target downlink channel to the first TCI state, where the seventh preset TCI state corresponds to the same first identification information as the first TCI state; the seventh preset TCI state is one of the at least two original TCI states of the target downlink channel that is at a preset location; or the seventh preset TCI state is associated with the first TCI state.

Scheme 1: In a case that the target downlink channel corresponds to the same first identification information as the first TCI state, that the terminal determines that the target TCI state includes the first TCI state may be understood as: one first TCI state indicated by the network side device is only used for a channel group/CORESET group/TRP ID/CORESETPoolIndex associated with the first TCI state, while for a channel and an RS resource corresponding to a channel group/CORESET group/TRP ID/CORESETPoolIndex not associated with the first TCI state, the TCI state is not updated, or transmission is stopped.

In an implementation, whether to update the TCI state may be determined depending on whether the channel group/CORESET group/TRP ID/CORESETPoolIndex corresponding to the PDSCH or the DL RS resource is associated with one first TCI state indicated by the network side device. Specifically, if it is associated with the first TCI state, an original TCI state of the target downlink channel may be updated to one first TCI state indicated by the network side device, that is, the TCI state is updated; and correspondingly, if it is not associated with the first TCI state, beam information or another downlink channel information may be determined by using the original TCI state of the target downlink channel, that is, the TCI state is not updated.

Scheme 2: In a case that the target downlink channel and the first TCI state correspond to different pieces of the first identification information, the terminal determines that the target TCI state includes an original TCI state of the target downlink channel or determines that the target downlink channel stops transmission. In other words, for the PDSCH or the DL RS resource corresponding to the channel group/CORESET group/TRP ID not associated with the first TCI state, the TCI state is not updated, or transmission is stopped.

Scheme 3: The terminal determines that the target TCI state includes a TCI state of a PDCCH that schedules or triggers the target downlink channel, which indicates that a TCI state of a PDCCH that schedules a PDSCH is used, or for an aperiodic DL RS resource, a TCI state of a PDCCH that schedules the DL RS is used, and for a DL RS resource that is periodic or carries periodic information, another manner may be used to determine the target TCI state.

Scheme 4: In a case that the target downlink channel has at least two original TCI states, the terminal determines the target TCI state as: the at least two original TCI states of the target downlink channel or the first TCI state, or the terminal determines to update a seventh preset TCI state in the at least two original TCI states of the target downlink channel to the first TCI state, which may be: if the PDSCH or the DL RS resource originally uses two TCI states for transmission, one first TCI state indicated by the network side device is directly used, that is, being updated to single-beam transmission mode, or a seventh preset TCI state among two TCI states originally used by the PDSCH or the DL RS resource is updated to one first TCI state indicated by the network side device. Alternatively, the TCI state is not updated. The seventh preset TCI state may correspond to a same channel group/CORESET group/TRP ID/CORESETPoolIndex as one first TCI state indicated by the network side device, the seventh preset TCI state may be one of the two TCI states (such as the first one) originally used by the PDSCH or the DL RS resource, or the seventh preset TCI state is associated, in advance, with one first TCI state indicated by the network side device.

In this implementation, the problem of how to determine the beam information or transmission information of the PDSCH and the DL RS resource based on first TCI states that are indicated by the network side device and that may be shared by all channels in the mTRP scenario is solved.

In an optional implementation, in a case that the transmission mode of the target downlink channel is a repetition transmission mode, or the type of the target downlink channel is a PDSCH or a DL RS resource, and target DCI that schedules the target downlink channel simultaneously schedules at least two PDSCHs or at least two DL RS resources:
after the terminal obtains common beam information indicated by a network side device, the method further includes:
sending, by the terminal, first feedback information to the network side device at a first moment, where the first feedback information indicates that the terminal has correctly received the common beam information; and
determining, by the terminal, that repetition transmission of the target downlink channel in a slot after a second moment, or a PDSCH or a DL RS resource that is scheduled by the target DCI and that is in a slot after the second moment uses the common beam information for transmission, where a time difference between the second moment and the first moment is first preset duration, and the second moment is later than the first moment.

The second moment may be a time point when the common beam information takes effect. In other words, the first preset duration may be a preset time period or a time period configured by the network side device, which may specifically include a time period between a moment when the first feedback information is sent from the terminal to the network side device and a moment when the network side device and the terminal start to use the common beam information, so that after the terminal sends the first feedback information, the common beam information may take effect by default after the first preset duration. Correspondingly, after receiving the first feedback information fed back by the terminal, the network side device may confirm, based on the first feedback information, that the terminal has correctly received the common beam information, and after the first feedback information is received, the common beam information takes effect by default after the first preset duration.

In an implementation, if a channel or a reference signal corresponding to the common beam information is a channel or a signal for repetition transmission, or a plurality of PDSCHs or DL RS resources scheduled by one piece of DCI, for example, a multi-slot PDSCH, multiple PDSCHs scheduled by single DCI, and the like, repetition transmission of a channel or a signal sent in a slot after first preset duration from a transmission moment of the first feedback information, or some PDSCHs in at least two PDSCHs scheduled by the one piece of DCI may use the common beam information. In other words, for all of the channels, transmission is performed across a plurality of slots, and if a slot in the plurality of slots happens to be an effective time of the common beam information, in slots of transmission for all of the channels after the effective time, all of the channels perform transmission by using common beam information newly indicated by a network. For example, if the transmission mode of the target downlink channel is the repetition transmission mode, and four times of repetition transmission thereof correspond to a slot 1, a slot 2, a slot 3 and a slot 4 respectively, and an effective time of the common beam information is the slot 3, the target downlink channel may use the common beam information (namely, the first TCI state) in the slot 3 and the slot 4, and use original beam information of the target downlink channel (namely, the original TCI state) in the slot 1 and the slot 2.

It should be noted that, the first feedback information may specifically refer to acknowledgement (Acknowledgement, ACK) information for receiving the common beam information, and the terminal and the network side device may determine that the common beam information does not take effect when the terminal sends or receives negative acknowledgement (Negative Acknowledgement, NACK) information of the common beam information.

In an implementation, if the transmission mode of the target downlink channel is the repetition transmission mode, a plurality of times of repetition transmission of the target downlink channel may span a plurality of slots; or if at least two PDSCHs are scheduled by using one piece of DCI, the at least two PDSCHs may be transmitted in different slots. In this way, an effective time of the common beam information may be within a plurality of slots spanned by the target downlink channel. In this implementation, after the common beam information takes effect, the common beam information may be used immediately to transmit a part of repetition transmission of the target downlink channel or some PDSCHs scheduled by one piece of DCI.

In this embodiment of this application, a unified TCI framework scheme applicable to the mTRP scenario is proposed, so that an R17 unified TCI framework may be applied to the mTRP scenario, and a beam determining scheme is proposed, namely, when the network side device indicates one or more joint/separate TCI states, how to apply these states to a PDCCH, another downlink channel, and a DL RS resource or resource set in a repetition, SFN, or conventional single-beam transmission mode, to determine beam information of a downlink channel, a DL RS resource or DL RS resource set in various transmission modes based on a unified TCI state (namely, the first TCI state) indicated by the network side device, thereby ensuring a consistent understanding for a beam used between the network side device and the terminal.

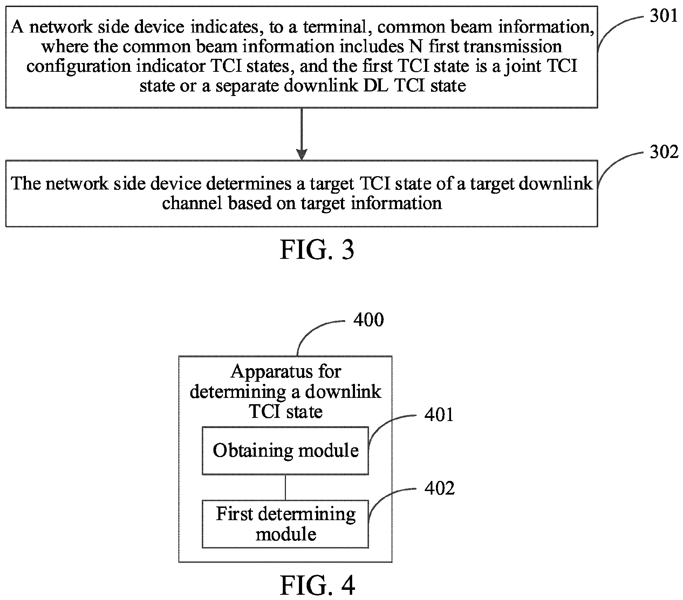

Refer to FIG. 3, an embodiment of this application provides another method for determining a downlink TCI state. A biggest difference between this method and the method embodiment shown in FIG. 2 is that an execution subject of the method embodiment shown in FIG. 2 is a terminal, while an execution subject of the method embodiment shown in FIG. 3 is a network side device, and steps executed by the network side device are the same as or corresponding to those executed by the terminal in the method embodiment shown in FIG. 2. Therefore, for explanations and descriptions in the method embodiment shown in FIG. 3, refer to corresponding explanations in the method embodiment shown in FIG. 2, and details are not described herein again.

As shown in FIG. 3, the method for determining a downlink TCI state that can be applied to a network side device may include the following steps.

Step 301: A network side device indicates, to a terminal, common beam information, where the common beam information includes N first transmission configuration indicator TCI states, the first TCI state is a joint TCI state or a separate downlink DL TCI state, and N is an integer greater than or equal to 1.

Step 302: The network side device determines a target TCI state of a target downlink channel based on target information. The target information includes at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, where
the first identification information includes at least one of the following:
   identification information of a control resource set CORESET;
   identification information of associated search spaces SS, where the associated SSs are used for repetition transmission of a PDCCH;
   identification information of a CORESET in which the associated SSs are located;
   transmission occasion information or transmission time information of the associated SSs;
   a CORESET pool index CORESETPoolIndex;
   identification ID information of a transmission reception point TRP;
   identification information of a channel group;
   identification information of a CORESET group; and
   identification information of a physical uplink control channel PUCCH resource group.

Optionally, in a case that the target information includes the quantity of the first TCI states, the determining, by the network side device, a target TCI state of a target downlink channel based on target information includes:
in a case that the terminal uses single-beam transmission, if the quantity of the first TCI states is one, determining, by the network side device, that the transmission mode of the target downlink channel is single-beam transmission;
in a case that the terminal uses single-beam transmission, if the quantity of the first TCI states is at least two, determining, by the network side device, that the transmission mode of the target downlink channel is single-beam transmission, a repetition transmission mode, or a multi-beam simultaneous transmission mode;
in a case that the terminal uses a repetition transmission mode or a multi-beam simultaneous transmission mode, if the quantity of the first TCI states is one, determining, by the network side device, that the transmission mode of the target downlink channel is single-beam transmission, the repetition transmission mode, or the multi-beam simultaneous transmission mode; or
in a case that the terminal uses a repetition transmission mode or a multi-beam simultaneous transmission mode, if the quantity of the first TCI states is at least two, determining, by the network side device, that the transmission mode of the target downlink channel is the repetition transmission mode or the multi-beam simultaneous transmission mode.

Optionally, in a case that the time-domain behavior of the target downlink channel is a periodic downlink channel, or the time-domain behavior of the carried information is periodic information, the target TCI state includes at least one of the following:
a TCI state other than the first TCI state in a TCI state pool or an original TCI state of the target downlink channel;
a first TCI state corresponding to the first identification information associated with the target downlink channel;
a first TCI state indicated by first indication information from the network side device; and
a first preset TCI state, where
the first preset TCI state includes at least one of the following:
   a first TCI state arranged at a preset location in all of the first TCI states; and
   a first TCI state corresponding to preset first identification information.

Optionally, in a case that the quantity of the first TCI states is greater than K, where K is a quantity of TCI states required by the target downlink channel, that the network side device determines a target TCI state of a target downlink channel based on target information includes:
determining, by the network side device, that K first TCI states arranged at preset locations are the target TCI states of the target downlink channel; or
determining, by the network side device from all first TCI states, that K first TCI states are the target TCI states, and sending second indication information to the terminal, where the second indication information indicates the K first TCI states.

Optionally, the second indication information is carried in a first signaling field, and the first signaling field is a signaling field in media access control MAC control element CE signaling or DCI signaling.

Optionally, the first signaling field is used for a DCI format 1_1 or a DCI format 1_2.

Optionally, the first signaling field takes effect or exists when a preset condition is met, and the preset condition includes at least one of the following:
the network side device configures the first signaling field;
the network side device indicates at least two first TCI states by using DCI signaling; and
at least one of TCI codepoints activated by the network side device by using a MAC CE corresponds to at least two TCI states.

Optionally, in a case that the target downlink channel has M TCI states, if the quantity of the first TCI states is at least M, the target TCI states are at least M of the first TCI states, and M is an integer greater than or equal to 2;
in a case that the target downlink channel has M TCI states, if N is less than M, the target TCI states are M original TCI states of the target downlink channel, or the target TCI states are (M-N) original TCI states of the target downlink channel and the N first TCI states, or the target TCI states are the N first TCI states; or
in a case that the target downlink channel has one TCI state, if the quantity of the first TCI states is at least one, the target TCI state is at least one first TCI state.

Optionally, the type of the target downlink channel includes at least one of the following: a physical downlink control channel PDCCH, a physical downlink shared channel PDSCH, a DL reference signal RS resource, a PDCCH in a first CORESET, a channel scheduled or triggered by the PDCCH in the first CORESET, and a channel associated with the first CORESET; and
the first CORESET includes at least one of the following: a CORESET #0, a CORESET associated with only a common search space CSS, a CORESET associated with only a UE-specific search space USS, and a CORESET associated with the USS and the CSS.

Optionally, the PDCCH includes at least one of the following:
all PDCCHs, a PDCCH in a control resource set CORESET dedicated to the terminal, a PDCCH in the CORESET associated with only the USS, a PDCCH in the CORESET associated with only the CSS, a PDCCH in the CORESET associated with the USS and the CSS, and a PDCCH in a CORESET other than the CORESET #0;
   and/or
the PDSCH includes at least one of the following:
a PDSCH scheduled by the PDCCH, a PDSCH associated with the PDCCH, and a PDSCH dedicated to the terminal.

Optionally, the transmission mode includes: a preset transmission mode, the repetition transmission mode, the multi-beam simultaneous transmission mode, or a transmission mode in which the preset transmission mode, the repetition transmission mode, and the multi-beam simultaneous transmission mode are dynamically switched, where the preset transmission mode is non-repetitive single-beam transmission;
that the network side device determines a target TCI state of a target downlink channel based on target information includes:
determining, by the network side device, the target TCI state of the target downlink channel from the first TCI state based on the transmission mode of the target downlink channel; and
the method for determining a downlink TCI state further includes:
   sending, by the network side device, third indication information to the terminal, where the third indication information indicates the transmission mode of the target downlink channel.

Optionally, in a case that the quantity of the first TCI states is greater than 1, if the type of the target downlink channel is a PDCCH, and the transmission mode is a repetition transmission mode, the target TCI state includes at least one of the following:
a first TCI state corresponding to same first identification information as first SSs, where the first SSs are at least two associated SSs in which the target downlink channel is located; and
all of the first TCI states, where each of the first TCI states is applied, based on the correspondence between the first TCI state and the first identification information, to the target downlink channel transmitted on the associated SSs;
   or
in a case that the quantity of the first TCI states is equal to 1, if the type of the target downlink channel is a PDCCH, and the transmission mode is a repetition transmission mode, the determining, by the network side device, a target TCI state of a target downlink channel based on target information includes at least one of the following:
   determining, by the network side device, that a repetition transmission configuration of the target downlink channel is invalid;
   determining, by the network side device, one of the at least two associated SSs in which the target downlink channel is located, to transmit the target downlink channel;
   determining, by the network side device, one of at least two CORESETs corresponding to the at least two associated SSs in which the target downlink channel is located, to transmit the target downlink channel;
   determining, by the network side device, to perform PDCCH repetition transmission based on the first TCI state;
   determining, by the network side device, that the target TCI state includes at least two original TCI states of the target downlink channel; and
   determining, by the network side device, to update a second preset TCI state in the at least two original TCI states of the target downlink channel to the first TCI state, where the second preset TCI state corresponds to the same first identification information as the first TCI state; the second preset TCI state is one of the at least two original TCI states of the target downlink channel that is at a preset location; or the second preset TCI state is associated with the first TCI state.

Optionally, in a multi-DCI mode, CORESETs in which the at least two associated SSs are located are in different pieces of CORESETPoolIndex; and in a single-DCI mode, the at least two associated SSs correspond to different pieces of the first identification information.

Optionally, before the network side device determines a target TCI state of a target downlink channel based on target information, the method for determining a downlink TCI state further includes:
sending, by the network side device, first configuration information to the terminal, where
the first configuration information is used to configure SSs in CORESETs corresponding to different pieces of the first identification information to be associated with each other.

Optionally, in a case that the quantity of the first TCI states is greater than 1, if the transmission mode of the target downlink channel is a multi-beam simultaneous transmission mode, the target TCI state includes at least one of the following:
at least two first TCI states of a CORESET in which the target downlink channel is located;
at least two first TCI states corresponding to at least two pieces of the first identification information;
at least two TCI states of the target downlink channel that are determined based on the arrangement sequence or the location of the first TCI state;
all of the first TCI states; and
a first TCI state corresponding to a first PDCCH, where the first PDCCH includes: a PDCCH that schedules the target downlink channel, a PDCCH that schedules the target downlink channel and that is in a multi-beam simultaneous transmission mode, any PDCCH, or any PDCCH in a multi-beam simultaneous transmission mode;
   or
in a case that the quantity of the first TCI states is equal to 1, if the transmission mode of the target downlink channel is a multi-beam simultaneous transmission mode, that the network side device determines a target TCI state of a target downlink channel of the terminal based on target information includes at least one of the following:
determining, by the network side device, that a multi-beam simultaneous transmission configuration of the target downlink channel is invalid;
determining, by the network side device, that the target downlink channel performs transmission based on the first TCI state;
determining, by the network side device, that the target TCI state includes at least two original TCI states of the target downlink channel; and
determining, by the network side device, to update a third preset TCI state in the at least two original TCI states of the target downlink channel to the first TCI state, where the third preset TCI state corresponds to the same first identification information as the first TCI state; the third preset TCI state is one of the at least two original TCI states of the target downlink channel that is at a preset location; or the third preset TCI state is associated with the first TCI state.

Optionally, in a case that the target TCI state includes at least two first TCI states, the method for determining a downlink TCI state further includes:
determining, by the network side device, a QCL parameter of the target downlink channel based on a target parameter, where the target parameter includes all QCL parameters of a fourth preset TCI state in the at least two first TCI states and an average delay parameter and a delay spread parameter of QCL-TypeA parameters of a TCI state other than the fourth preset TCI state in the at least two first TCI states.

Optionally, in a case that the type of the target downlink channel is a PDCCH, and the transmission mode is a preset transmission mode, the target TCI state includes a fifth preset TCI state, where the fifth preset TCI state includes at least one of the following:
a first TCI state arranged at a preset location in all of the first TCI states;
a first TCI state corresponding to preset first identification information;
a first TCI state corresponding to the first identification information associated with the target downlink channel; and
a first TCI state indicated by the network side device from all of the first TCI states.

Optionally, in a case that the quantity of the first TCI states is greater than 1, if the type of the target downlink channel is a PDSCH or a DL RS resource, the target TCI state includes at least one of the following:
all of the first TCI states;
at least one first TCI state indicated by the network side device from all of the first TCI states; and
a sixth preset TCI state, where
the sixth preset TCI state includes at least one of the following:
   a first TCI state corresponding to a first codepoint or at least one of first TCI states corresponding to the first codepoint, where the first codepoint is a codepoint indicated by a TCI field in DCI indicating the first TCI state;
   a first TCI state corresponding to preset first identification information;
   a first TCI state that is the same as a TCI state of a PDCCH on which DCI that schedules the target downlink channel is located;
   a first TCI state corresponding to first identification information associated with a PDCCH on which DCI that schedules the target downlink channel is located;
   a first TCI state corresponding to the first identification information associated with the target downlink channel;
   a first TCI state that is determined based on a second codepoint indicated by the network side device and that is dedicated to the target downlink channel, where the second codepoint is a codepoint indicated by a TCI field in DCI that schedules the target downlink channel, and the first TCI state corresponding to the second codepoint is a subset or a full set of the first TCI state corresponding to the first codepoint; and
   a first TCI state that is the same as that of a PDCCH for repetition transmission or multi-beam simultaneous transmission, or at least one of first TCI states of the PDCCH for repetition transmission or multi-beam simultaneous transmission, where the PDCCH for the repetition transmission or the multi-beam simultaneous transmission is a PDCCH on which DCI indicating the first TCI state is located, or a PDCCH that schedules the target downlink channel;
      or
   in a case that the quantity of the first TCI states is equal to 1, if the type of the target downlink channel is a PDSCH or a DL RS resource, the determining, by the network side device, a target TCI state of a target downlink channel based on target information includes at least one of the following:
      in a case that the target downlink channel corresponds to the same first identification information as the first TCI state, determining, by the network side device, that the target TCI state includes the first TCI state;
      in a case that the target downlink channel and the first TCI state correspond to different pieces of the first identification information, determining, by the network side device, that the target TCI state includes an original TCI state of the target downlink channel or determining that the target downlink channel stops transmission;
      determining, by the network side device, that the target TCI state includes a TCI state of a PDCCH that schedules or triggers the target downlink channel; and
      in a case that the target downlink channel has at least two original TCI states, determining, by the network side device, the target TCI state as: the at least two original TCI states of the target downlink channel or the first TCI state, or determining, by the terminal, to update a seventh preset TCI state in the at least two original TCI states of the target downlink channel to the first TCI state, where the seventh preset TCI state corresponds to the same first identification information as the first TCI state; the seventh preset TCI state is one of the at least two original TCI states of the target downlink channel that is at a preset location; or the seventh preset TCI state is associated with the first TCI state.

Optionally, in a case that the transmission mode of the target downlink channel is a repetition transmission mode, or the type of the target downlink channel is a PDSCH or a DL RS resource, and target DCI that schedules the target downlink channel simultaneously schedules at least two PDSCHs or at least two DL RS resources:
after the terminal obtains common beam information indicated by a network side device, the method further includes:
receiving, by the network side device, first feedback information from the terminal, where the first feedback information indicates that the terminal has correctly received the common beam information;
configuring, by the network side device based on the first feedback information, the common beam information to take effect; and
determining, by the network side device, that repetition transmission of the target downlink channel in a slot after a second moment, or a PDSCH or a DL RS resource that is scheduled by the target DCI and that is in a slot after the second moment uses the common beam information for transmission, where the second moment is an effective moment of the common beam information.

In this embodiment of this application, a unified TCI framework scheme applicable to the mTRP scenario is proposed, so that an R17 unified TCI framework may be applied to the mTRP scenario, and a beam determining scheme is proposed, namely, when the network side device indicates one or more joint/separate TCI states, how to apply these states to a PDCCH, another downlink channel, and a DL RS resource or resource set in a repetition, SFN, or conventional single-beam transmission mode, to determine beam information of a downlink channel, a DL RS resource or DL RS resource set in various transmission modes based on a unified TCI state (namely, the first TCI state) indicated by the network side device, thereby ensuring a consistent understanding for a beam used between the network side device and the terminal.

The method for determining a downlink TCI state provided in this embodiment of this application may be executed by an apparatus for determining a downlink TCI state. In this embodiment of this application, that the apparatus for determining a downlink TCI state performs the method for determining a downlink TCI state is used as an example to describe the apparatus for determining a downlink TCI state provided in this embodiment of this application.

In an implementation, if the apparatus for determining a downlink TCI state is used in a terminal, as shown in FIG. 4, the apparatus for determining a downlink TCI state 400 may include the following modules:
a first obtaining module 401, configured to obtain common beam information indicated by a network side device, where the common beam information includes N first transmission configuration indicator TCI states, the first TCI state is a joint TCI state or a separate downlink DL TCI state, and N is an integer greater than or equal to 1; and
a first determining module 402, configured to determine a target TCI state of a target downlink channel based on target information, where the target information includes at least one of the following:
   a quantity of the first TCI states;
   an arrangement sequence or a location of the first TCI state;
   a correspondence between the first TCI state and first identification information;
   a type of the target downlink channel;
   a transmission mode of the target downlink channel;
   a time-domain behavior of the target downlink channel or a time-domain behavior of information carried on the target downlink channel;
   a quantity of pieces of first identification information corresponding to the target downlink channel; and
   a value of first identification information corresponding to the target downlink channel, where
   the first identification information includes at least one of the following:
      identification information of a control resource set CORESET;
      identification information of associated search spaces SS, where the associated SSs are used for repetition transmission of a PDCCH;
      identification information of a CORESET in which the associated SSs are located;
      transmission occasion information or transmission time information of the associated SSs;
      a CORESET pool index CORESETPoolIndex;
      identification ID information of a transmission reception point TRP;
      identification information of a channel group;
      identification information of a CORESET group; and
      identification information of a physical uplink control channel PUCCH resource group.

Optionally, in a case that the target information includes the quantity of the first TCI states, the first determining module 402 is specifically configured to:
in a case that the terminal uses single-beam transmission, if the quantity of the first TCI states is one, determine that the transmission mode of the target downlink channel is single-beam transmission;
in a case that the terminal uses single-beam transmission, if the quantity of the first TCI states is at least two, determine that the transmission mode of the target downlink channel is single-beam transmission, a repetition transmission mode, or a multi-beam simultaneous transmission mode;
in a case that the terminal uses a repetition transmission mode or a multi-beam simultaneous transmission mode, if the quantity of the first TCI states is one, determine that the transmission mode of the target downlink channel is single-beam transmission, the repetition transmission mode, or the multi-beam simultaneous transmission mode; or
in a case that the terminal uses a repetition transmission mode or a multi-beam simultaneous transmission mode, if the quantity of the first TCI states is at least two, determine that the transmission mode of the target downlink channel is the repetition transmission mode or the multi-beam simultaneous transmission mode.

Optionally, in a case that the time-domain behavior of the target downlink channel is a periodic downlink channel, or the time-domain behavior of the carried information is periodic information, the target TCI state includes at least one of the following:
a TCI state other than the first TCI state in a TCI state pool or an original TCI state of the target downlink channel;
a first TCI state corresponding to the first identification information associated with the target downlink channel;
a first TCI state indicated by first indication information from the network side device; and
a first preset TCI state, where
the first preset TCI state includes at least one of the following:
   a first TCI state arranged at a preset location in all of the first TCI states; and
   a first TCI state corresponding to preset first identification information.

Optionally, in a case that the quantity of the first TCI states is greater than K, where K is a quantity of TCI states required by the target downlink channel, the first determining module 402 is specifically configured to:
determine that K first TCI states arranged at preset locations are the target TCI states of the target downlink channel; or
determine the target TCI state of the target downlink channel based on an indication of second indication information from the network side device, where the second indication information indicates K first TCI states.

Optionally, the second indication information is carried in a first signaling field, and the first signaling field is a signaling field in media access control MAC control element CE signaling or DCI signaling.

Optionally, the first signaling field is used for a DCI format 1_1 or a DCI format 1_2.

Optionally, the first signaling field takes effect or exists when a preset condition is met, and the preset condition includes at least one of the following:
the network side device configures the first signaling field;
the network side device indicates at least two first TCI states by using DCI signaling; and
at least one of TCI codepoints activated by the network side device by using a media access control MAC control element CE corresponds to at least two TCI states.

Optionally, the first TCI state includes N joint TCI states or N separate downlink DL TCI states, and N is an integer greater than 1.

Optionally, in a case that the target downlink channel has M TCI states, if the quantity of the first TCI states is at least M, the target TCI states are at least M of the first TCI states, and M is an integer greater than or equal to 2;
in a case that the target downlink channel has M TCI states, if N is less than M, the target TCI states are M original TCI states of the target downlink channel, or the target TCI states are (M-N) original TCI states of the target downlink channel and the N first TCI states, or the target TCI states are the N first TCI states; or
in a case that the target downlink channel has one TCI state, if the quantity of the first TCI states is at least one, the target TCI state is at least one first TCI state.

Optionally, the type of the target downlink channel includes at least one of the following: a physical downlink control channel PDCCH, a physical downlink shared channel PDSCH, a DL reference signal RS resource, a PDCCH in a first CORESET, a channel scheduled or triggered by the PDCCH in the first CORESET, and a channel associated with the first CORESET; and
the first CORESET includes at least one of the following: a CORESET #0, a CORESET associated with only a common search space CSS, a CORESET associated with only a UE-specific search space USS, and a CORESET associated with the USS and the CSS.

Optionally, the PDCCH includes at least one of the following:
all PDCCHs, a PDCCH in a control resource set CORESET dedicated to the terminal, a PDCCH in the CORESET associated with only the USS, a PDCCH in the CORESET associated with only the CSS, a PDCCH in the CORESET associated with the USS and the CSS, and a PDCCH in a CORESET other than the CORESET #0;
   and/or
the PDSCH includes at least one of the following:
a PDSCH scheduled by the PDCCH, a PDSCH associated with the PDCCH, and a PDSCH dedicated to the terminal.

Optionally, the apparatus for determining a downlink TCI state 400 further includes:
a first receiving module, configured to receive third indication information from the network side device; and
a third determining module, configured to determine the transmission mode of the target downlink channel based on the third indication information, where the transmission mode includes: a preset transmission mode, the repetition transmission mode, the multi-beam simultaneous transmission mode, or a transmission mode in which the preset transmission mode, the repetition transmission mode, and the multi-beam simultaneous transmission mode are dynamically switched, where the preset transmission mode is non-repetitive single-beam transmission.

Optionally, in a case that the quantity of the first TCI states is greater than 1, if the type of the target downlink channel is a PDCCH, and the transmission mode is a repetition transmission mode, the target TCI state includes at least one of the following:
a first TCI state corresponding to same first identification information as first SSs, where the first SSs are at least two associated SSs in which the target downlink channel is located; and
all of the first TCI states, where each of the first TCI states is applied, based on the correspondence between the first TCI state and the first identification information, to the target downlink channel transmitted on the associated SSs;
   or
in a case that the quantity of the first TCI states is equal to 1, if the type of the target downlink channel is a PDCCH, and the transmission mode is a repetition transmission mode, the first determining module 402 is specifically configured to perform at least one of the following:
   determining that a repetition transmission configuration of the target downlink channel is invalid;
   determining one of the at least two associated SSs in which the target downlink channel is located, to transmit the target downlink channel;
   determining one of at least two CORESETs corresponding to the at least two associated SSs in which the target downlink channel is located, to transmit the target downlink channel;
   determining to perform PDCCH repetition transmission based on the first TCI state;
   determining that the target TCI state includes at least two original TCI states of the target downlink channel; and
   determining to update a second preset TCI state in the at least two original TCI states of the target downlink channel to the first TCI state, where the second preset TCI state corresponds to the same first identification information as the first TCI state; the second preset TCI state is one of the at least two original TCI states of the target downlink channel that is at a preset location; or the second preset TCI state is associated with the first TCI state.

Optionally, in a multi-DCI mode, CORESETs in which the at least two associated SSs are located are in different pieces of CORESETPoolIndex; and
in a single-DCI mode, the at least two associated SSs correspond to different pieces of the first identification information.

Optionally, the apparatus for determining a downlink TCI state 400 further includes:
a second receiving module, configured to receive first configuration information from the network side device, where
the first configuration information is used to configure SSs in CORESETs corresponding to different pieces of the first identification information to be associated with each other.

Optionally, in a case that the quantity of the first TCI states is greater than 1, if the transmission mode of the target downlink channel is a multi-beam simultaneous transmission mode, the target TCI state includes at least one of the following:
at least two first TCI states of a CORESET in which the target downlink channel is located;
at least two first TCI states corresponding to at least two pieces of the first identification information;
at least two TCI states of the target downlink channel that are determined based on the arrangement sequence or the location of the first TCI state;
all of the first TCI states; and
a first TCI state corresponding to a first PDCCH, where the first PDCCH includes: a PDCCH that schedules the target downlink channel, a PDCCH that schedules the target downlink channel and that is in a multi-beam simultaneous transmission mode, any PDCCH, or any PDCCH in a multi-beam simultaneous transmission mode;
   or
in a case that the quantity of the first TCI states is equal to 1, if the transmission mode of the target downlink channel is a multi-beam simultaneous transmission mode, the first determining module 402 is specifically configured to perform at least one of the following:
   determining that a multi-beam simultaneous transmission configuration of the target downlink channel is invalid;
   determining that the target downlink channel performs transmission based on the first TCI state;
   determining that the target TCI state includes at least two original TCI states of the target downlink channel; and
   determining to update a third preset TCI state in the at least two original TCI states of the target downlink channel to the first TCI state, where the third preset TCI state corresponds to the same first identification information as the first TCI state; the third preset TCI state is one of the at least two original TCI states of the target downlink channel that is at a preset location; or the third preset TCI state is associated with the first TCI state.

Optionally, in a case that the target TCI state includes at least two first TCI states, the apparatus for determining a downlink TCI state 400 further includes:
a fourth determining module, configured to determine a QCL parameter of the target downlink channel based on a target parameter, where the target parameter includes all QCL parameters of a fourth preset TCI state in the at least two first TCI states and an average delay parameter and a delay spread parameter of QCL-TypeA parameters of a TCI state other than the fourth preset TCI state in the at least two first TCI states.

Optionally, in a case that the type of the target downlink channel is a PDCCH, and the transmission mode is a preset transmission mode, the target TCI state includes a fifth preset TCI state, where the fifth preset TCI state includes at least one of the following:
a first TCI state arranged at a preset location in all of the first TCI states;
a first TCI state corresponding to preset first identification information;
a first TCI state corresponding to the first identification information associated with the target downlink channel; and
a first TCI state indicated by the network side device from all of the first TCI states.

Optionally, in a case that the quantity of the first TCI states is greater than 1, if the type of the target downlink channel is a PDSCH or a DL RS resource, the target TCI state includes at least one of the following:
all of the first TCI states;
at least one first TCI state indicated by the network side device from all of the first TCI states; or
a sixth preset TCI state, where
the sixth preset TCI state includes at least one of the following:
   a first TCI state corresponding to a first codepoint or at least one of first TCI states corresponding to the first codepoint, where the first codepoint is a codepoint indicated by a TCI field in DCI indicating the first TCI state;
   a first TCI state corresponding to preset first identification information;
   a first TCI state that is the same as a TCI state of a PDCCH on which DCI that schedules the target downlink channel is located;
   a first TCI state corresponding to first identification information associated with a PDCCH on which DCI that schedules the target downlink channel is located;
   a first TCI state corresponding to the first identification information associated with the target downlink channel;
   a first TCI state that is determined based on a second codepoint indicated by the network side device and that is dedicated to the target downlink channel, where the second codepoint is a codepoint indicated by a TCI field in DCI that schedules the target downlink channel, and the first TCI state corresponding to the second codepoint is a subset or a full set of the first TCI state corresponding to the first codepoint; and
   a first TCI state that is the same as that of a PDCCH for repetition transmission or multi-beam simultaneous transmission, or at least one of first TCI states of the PDCCH for repetition transmission or multi-beam simultaneous transmission, where the PDCCH for the repetition transmission or the multi-beam simultaneous transmission is a PDCCH on which DCI indicating the first TCI state is located, or a PDCCH that schedules the target downlink channel;
      or
   in a case that the quantity of the first TCI states is equal to 1, if the type of the target downlink channel is a PDSCH or a DL RS resource, the first determining module 402 is specifically configured to perform at least one of the following:
      in a case that the target downlink channel corresponds to the same first identification information as the first TCI state, determining that the target TCI state includes the first TCI state;
      in a case that the target downlink channel and the first TCI state correspond to different pieces of the first identification information, determining that the target TCI state includes an original TCI state of the target downlink channel or determining that the target downlink channel stops transmission;
      determining that the target TCI state includes a TCI state of a PDCCH that schedules or triggers the target downlink channel; and
      in a case that the target downlink channel has at least two original TCI states, determining the target TCI state as: the at least two original TCI states of the target downlink channel or the first TCI state, or determining, by the terminal, to update a seventh preset TCI state in the at least two original TCI states of the target downlink channel to the first TCI state, where the seventh preset TCI state corresponds to the same first identification information as the first TCI state; the seventh preset TCI state is one of the at least two original TCI states of the target downlink channel that is at a preset location; or the seventh preset TCI state is associated with the first TCI state.

Optionally, in a case that the transmission mode of the target downlink channel is a repetition transmission mode, or the type of the target downlink channel is a PDSCH or a DL RS resource, and target DCI that schedules the target downlink channel simultaneously schedules at least two PDSCHs or at least two DL RS resources:
the apparatus for determining a downlink TCI state 400 further includes:
a third sending module, configured to send first feedback information to the network side device at a first moment, where the first feedback information indicates that the terminal has correctly received the common beam information; and
a sixth determining module, configured to determine that repetition transmission of the target downlink channel in a slot after a second moment, or a PDSCH or a DL RS resource that is scheduled by the target DCI and that is in a slot after the second moment uses the common beam information for transmission, where a time difference between the second moment and the first moment is first preset duration, and the second moment is later than the first moment.

The apparatus for determining a downlink TCI state 400 in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11. The another device may be a server, a network attached storage (Network Attached Storage, NAS), and the like. This is not specifically limited in this embodiment of this application.

The apparatus for determining a downlink TCI state 400 provided in this embodiment of this application can implement the steps performed by the terminal in the method embodiment shown in FIG. 2, and a same beneficial effect can be achieved. To avoid repetition, details are not described herein again.

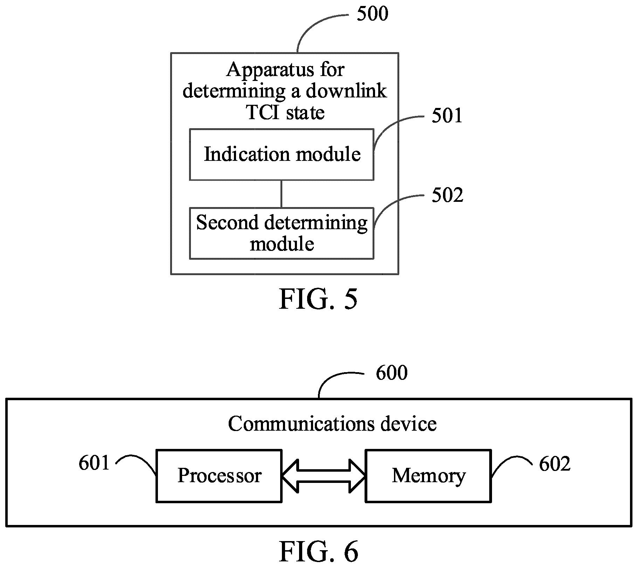

In another implementation, if the apparatus for determining a downlink TCI state is used in a network side device, as shown in FIG. 5, the apparatus for determining a downlink TCI state 500 may include the following modules:
an indication module 501, configured to indicate common beam information to a terminal, where the common beam information includes N first transmission configuration indicator TCI states, the first TCI state is a joint TCI state or a separate downlink DL TCI state, and N is an integer greater than or equal to 1; and
a second determining module 502, configured to determine a target TCI state of a target downlink channel based on target information. The target information includes at least one of the following:
   a quantity of the first TCI states;
   an arrangement sequence or a location of the first TCI state;
   a correspondence between the first TCI state and first identification information;
   a type of the target downlink channel;
   a transmission mode of the target downlink channel;
   a time-domain behavior of the target downlink channel or a time-domain behavior of information carried on the target downlink channel;
   a quantity of pieces of first identification information corresponding to the target downlink channel; and
   a value of first identification information corresponding to the target downlink channel, where
   the first identification information includes at least one of the following:
      identification information of a control resource set CORESET;
      identification information of associated search spaces SS, where the associated SSs are used for repetition transmission of a PDCCH;
      identification information of a CORESET in which the associated SSs are located;
      transmission occasion information or transmission time information of the associated SSs;
      a CORESET pool index CORESETPoolIndex;
      identification ID information of a transmission reception point TRP;
      identification information of a channel group;
      identification information of a CORESET group; and
      identification information of a physical uplink control channel PUCCH resource group.

Optionally, in a case that the target information includes the quantity of the first TCI states, the second determining module 502 is specifically configured to:
in a case that the terminal uses single-beam transmission, if the quantity of the first TCI states is one, determine that the transmission mode of the target downlink channel is single-beam transmission;
in a case that the terminal uses single-beam transmission, if the quantity of the first TCI states is at least two, determine that the transmission mode of the target downlink channel is single-beam transmission, a repetition transmission mode, or a multi-beam simultaneous transmission mode;
in a case that the terminal uses a repetition transmission mode or a multi-beam simultaneous transmission mode, if the quantity of the first TCI states is one, determine that the transmission mode of the target downlink channel is single-beam transmission, the repetition transmission mode, or the multi-beam simultaneous transmission mode; or
in a case that the terminal uses a repetition transmission mode or a multi-beam simultaneous transmission mode, if the quantity of the first TCI states is at least two, determine that the transmission mode of the target downlink channel is the repetition transmission mode or the multi-beam simultaneous transmission mode.

Optionally, in a case that the time-domain behavior of the target downlink channel is a periodic downlink channel, or the time-domain behavior of the carried information is periodic information, the target TCI state includes at least one of the following:
a TCI state other than the first TCI state in a TCI state pool or an original TCI state of the target downlink channel;
a first TCI state corresponding to the first identification information associated with the target downlink channel;
a first TCI state indicated by first indication information from the network side device; and
a first preset TCI state, where
the first preset TCI state includes at least one of the following:
   a first TCI state arranged at a preset location in all of the first TCI states; and
   a first TCI state corresponding to preset first identification information.

Optionally, in a case that the quantity of the first TCI states is greater than K, where K is a quantity of TCI states required by the target downlink channel, the second determining module 502 includes:
a first determining unit, configured to determine that K first TCI states arranged at preset locations are the target TCI states of the target downlink channel; or
a second determining unit and a sending unit, where the second determining unit is configured to determine, from all first TCI states, that K first TCI states are the target TCI states; and the sending unit is configured to send second indication information to the terminal, where the second indication information indicates the K first TCI states.

Optionally, the second indication information is carried in a first signaling field, and the first signaling field is a signaling field in media access control MAC control element CE signaling or DCI signaling.

Optionally, the first signaling field is used for a DCI format 1_1 or a DCI format 1_2.

Optionally, the first signaling field takes effect or exists when a preset condition is met, and the preset condition includes at least one of the following:
the network side device configures the first signaling field;
the network side device indicates at least two first TCI states by using DCI signaling; and
at least one of TCI codepoints activated by the network side device by using a MAC CE corresponds to at least two TCI states.

Optionally, in a case that the target downlink channel has M TCI states, if the quantity of the first TCI states is at least M, the target TCI states are at least M of the first TCI states, and M is an integer greater than or equal to 2;
in a case that the target downlink channel has M TCI states, if N is less than M, the target TCI states are M original TCI states of the target downlink channel, or the target TCI states are (M-N) original TCI states of the target downlink channel and the N first TCI states, or the target TCI states are the N first TCI states; or
in a case that the target downlink channel has one TCI state, if the quantity of the first TCI states is at least one, the target TCI state is at least one first TCI state.

Optionally, the type of the target downlink channel includes at least one of the following: a physical downlink control channel PDCCH, a physical downlink shared channel PDSCH, a DL reference signal RS resource, a PDCCH in a first CORESET, a channel scheduled or triggered by the PDCCH in the first CORESET, and a channel associated with the first CORESET; and
the first CORESET includes at least one of the following: a CORESET #0, a CORESET associated with only a common search space CSS, a CORESET associated with only a UE-specific search space USS, and a CORESET associated with the USS and the CSS.

Optionally, the PDCCH includes at least one of the following:
the PDCCH includes at least one of the following:
all PDCCHs, a PDCCH in a control resource set CORESET dedicated to the terminal, a PDCCH in the CORESET associated with only the USS, a PDCCH in the CORESET associated with only the CSS, a PDCCH in the CORESET associated with the USS and the CSS, and a PDCCH in a CORESET other than the CORESET #0;
   and/or
the PDSCH includes at least one of the following:
a PDSCH scheduled by the PDCCH, a PDSCH associated with the PDCCH, and a PDSCH dedicated to the terminal.

Optionally, the transmission mode includes: a preset transmission mode, the repetition transmission mode, the multi-beam simultaneous transmission mode, or a transmission mode in which the preset transmission mode, the repetition transmission mode, and the multi-beam simultaneous transmission mode are dynamically switched, where the preset transmission mode is non-repetitive single-beam transmission;
the second determining module 502 is specifically configured to:
determine the target TCI state of the target downlink channel from the first TCI state based on the transmission mode of the target downlink channel; and
the apparatus for determining a downlink TCI state 500 further includes:
a first sending module, configured to send third indication information to the terminal, where the third indication information indicates the transmission mode of the target downlink channel.

Optionally, in a case that the quantity of the first TCI states is greater than 1, if the type of the target downlink channel is a PDCCH, and the transmission mode is a repetition transmission mode, the target TCI state includes at least one of the following:
a first TCI state corresponding to same first identification information as first SSs, where the first SSs are at least two associated SSs in which the target downlink channel is located; and
all of the first TCI states, where each of the first TCI states is applied, based on the correspondence between the first TCI state and the first identification information, to the target downlink channel transmitted on the associated SSs;
   or
in a case that the quantity of the first TCI states is equal to 1, if the type of the target downlink channel is a PDCCH, and the transmission mode is a repetition transmission mode, the second determining module 502 is specifically configured to perform at least one of the following:
   determining that a repetition transmission configuration of the target downlink channel is invalid;
   determining one of the at least two associated SSs in which the target downlink channel is located, to transmit the target downlink channel;
   determining one of at least two CORESETs corresponding to the at least two associated SSs in which the target downlink channel is located, to transmit the target downlink channel;
   determining to perform PDCCH repetition transmission based on the first TCI state;
   determining that the target TCI state includes at least two original TCI states of the target downlink channel; and
   determining to update a second preset TCI state in the at least two original TCI states of the target downlink channel to the first TCI state, where the second preset TCI state corresponds to the same first identification information as the first TCI state; the second preset TCI state is one of the at least two original TCI states of the target downlink channel that is at a preset location; or the second preset TCI state is associated with the first TCI state.

Optionally, in a multi-DCI mode, CORESETs in which the at least two associated SSs are located are in different pieces of CORESETPoolIndex; and
in a single-DCI mode, the at least two associated SSs correspond to different pieces of the first identification information.

Optionally, the apparatus for determining a downlink TCI state 500 further includes:
a second sending module, configured to send first configuration information to the terminal, where
the first configuration information is used to configure SSs in CORESETs corresponding to different pieces of the first identification information to be associated with each other.

Optionally, in a case that the quantity of the first TCI states is greater than 1, if the transmission mode of the target downlink channel is a multi-beam simultaneous transmission mode, the target TCI state includes at least one of the following:
at least two first TCI states of a CORESET in which the target downlink channel is located;
at least two first TCI states corresponding to at least two pieces of the first identification information;
at least two TCI states of the target downlink channel that are determined based on the arrangement sequence or the location of the first TCI state;
all of the first TCI states; and
a first TCI state corresponding to a first PDCCH, where the first PDCCH includes: a PDCCH that schedules the target downlink channel, a PDCCH that schedules the target downlink channel and that is in a multi-beam simultaneous transmission mode, any PDCCH, or any PDCCH in a multi-beam simultaneous transmission mode;
   or
in a case that the quantity of the first TCI states is equal to 1, if the transmission mode of the target downlink channel is a multi-beam simultaneous transmission mode, the second determining module 502 is specifically configured to perform at least one of the following:
   determining that a multi-beam simultaneous transmission configuration of the target downlink channel is invalid;
   determining that the target downlink channel performs transmission based on the first TCI state;
   determining that the target TCI state includes at least two original TCI states of the target downlink channel; and
   determining to update a third preset TCI state in the at least two original TCI states of the target downlink channel to the first TCI state, where the third preset TCI state corresponds to the same first identification information as the first TCI state; the third preset TCI state is one of the at least two original TCI states of the target downlink channel that is at a preset location; or the third preset TCI state is associated with the first TCI state.

Optionally, in a case that the target TCI state includes at least two first TCI states, the apparatus for determining a downlink TCI state 500 further includes:
a fifth determining module, configured to determine a QCL parameter of the target downlink channel based on a target parameter, where the target parameter includes all QCL parameters of a fourth preset TCI state in the at least two first TCI states and an average delay parameter and a delay spread parameter of QCL-TypeA parameters of a TCI state other than the fourth preset TCI state in the at least two first TCI states.

Optionally, in a case that the type of the target downlink channel is a PDCCH, and the transmission mode is a preset transmission mode, the target TCI state includes a fifth preset TCI state, where the fifth preset TCI state includes at least one of the following:
a first TCI state arranged at a preset location in all of the first TCI states;
a first TCI state corresponding to preset first identification information;
a first TCI state corresponding to the first identification information associated with the target downlink channel; and
a first TCI state indicated by the network side device from all of the first TCI states.

Optionally, in a case that the quantity of the first TCI states is greater than 1, if the type of the target downlink channel is a PDSCH or a DL RS resource, the target TCI state includes at least one of the following:
all of the first TCI states;
at least one first TCI state indicated by the network side device from all of the first TCI states; and
a sixth preset TCI state, where
the sixth preset TCI state includes at least one of the following:
   a first TCI state corresponding to a first codepoint or at least one of first TCI states corresponding to the first codepoint, where the first codepoint is a codepoint indicated by a TCI field in DCI indicating the first TCI state;
   a first TCI state corresponding to preset first identification information;
   a first TCI state that is the same as a TCI state of a PDCCH on which DCI that schedules the target downlink channel is located;
   a first TCI state corresponding to first identification information associated with a PDCCH on which DCI that schedules the target downlink channel is located;
   a first TCI state corresponding to the first identification information associated with the target downlink channel;
   a first TCI state that is determined based on a second codepoint indicated by the network side device and that is dedicated to the target downlink channel, where the second codepoint is a codepoint indicated by a TCI field in DCI that schedules the target downlink channel, and the first TCI state corresponding to the second codepoint is a subset or a full set of the first TCI state corresponding to the first codepoint; and
   a first TCI state that is the same as that of a PDCCH for repetition transmission or multi-beam simultaneous transmission, or at least one of first TCI states of the PDCCH for repetition transmission or multi-beam simultaneous transmission, where the PDCCH for the repetition transmission or the multi-beam simultaneous transmission is a PDCCH on which DCI indicating the first TCI state is located, or a PDCCH that schedules the target downlink channel;
      or
   in a case that the quantity of the first TCI states is equal to 1, if the type of the target downlink channel is a PDSCH or a DL RS resource, the second determining module 502 is specifically configured to perform at least one of the following:
   in a case that the target downlink channel corresponds to the same first identification information as the first TCI state, determining that the target TCI state includes the first TCI state;
   in a case that the target downlink channel and the first TCI state correspond to different pieces of the first identification information, determining that the target TCI state includes an original TCI state of the target downlink channel or determining that the target downlink channel stops transmission;
   determining that the target TCI state includes a TCI state of a PDCCH that schedules or triggers the target downlink channel; and
   in a case that the target downlink channel has at least two original TCI states, determining the target TCI state as: the at least two original TCI states of the target downlink channel or the first TCI state, or determining, by the terminal, to update a seventh preset TCI state in the at least two original TCI states of the target downlink channel to the first TCI state, where the seventh preset TCI state corresponds to the same first identification information as the first TCI state; the seventh preset TCI state is one of the at least two original TCI states of the target downlink channel that is at a preset location; or the seventh preset TCI state is associated with the first TCI state.

Optionally, in a case that the transmission mode of the target downlink channel is a repetition transmission mode, or the type of the target downlink channel is a PDSCH or a DL RS resource, and target DCI that schedules the target downlink channel simultaneously schedules at least two PDSCHs or at least two DL RS resources:
the apparatus for determining a downlink TCI state 500 further includes:
a third receiving module, configured to receive first feedback information from the terminal, where the first feedback information indicates that the terminal has correctly received the common beam information;
a configuring module, configured to configure, based on the first feedback information, the common beam information to take effect; and
a seventh determining module, configured to determine that repetition transmission of the target downlink channel in a slot after a second moment, or a PDSCH or a DL RS resource that is scheduled by the target DCI and that is in a slot after the second moment uses the common beam information for transmission, where the second moment is an effective moment of the common beam information.

The apparatus for determining a downlink TCI state 500 in this embodiment of this application may be an electronic device, for example, an electronic device with an operating system, or may be a component in the electronic device, for example, an integrated circuit or a chip. The electronic device may be a network side device, or another device other than the network side device. For example, the network side device may include but is not limited to the foregoing listed types of the network side device 12. The another device may be a server, a network attached storage (Network Attached Storage, NAS), and the like. This is not specifically limited in this embodiment of this application.

The apparatus for determining a downlink TCI state 500 provided in this embodiment of this application can implement the steps performed by the terminal in the method embodiment shown in FIG. 3, and a same beneficial effect can be achieved. To avoid repetition, details are not described herein again.

Optionally, as shown in FIG. 6, an embodiment of this application further provides a communications device 600, including a processor 601 and a memory 602. The memory 602 stores a program or instructions executable on the processor 601. For example, in a case that the communications device 600 is a terminal, when the program or the instructions are executed by the processor 601, the steps of the method for determining a downlink TCI state embodiment shown in FIG. 2 or FIG. 3 are implemented, and a same technical effect can be achieved. In a case that the communications device 600 is a terminal, when the program or the instructions are executed by the processor 601, the steps of the method embodiment shown in FIG. 2 are implemented; and in a case that the communications device 600 is a network side device, when the program or the instructions are executed by the processor 601, the steps of the method embodiment shown in FIG. 3 are implemented, and a same technical effect can be achieved. To avoid repetition, details are not described herein again.

An embodiment of this application further provides a terminal, including a processor and a communications interface, where the communications interface is configured to obtain common beam information indicated by a network side device, the common beam information includes N first transmission configuration indicator TCI states, the first TCI state is a joint TCI state or a separate downlink DL TCI state, and N is an integer greater than or equal to 1; and the processor is configured to determine a target TCI state of a target downlink channel based on target information, where the target information includes at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, where
the first identification information includes at least one of the following:
   identification information of a control resource set CORESET;
   identification information of associated search spaces SS, where the associated SSs are used for repetition transmission of a PDCCH;
   identification information of a CORESET in which the associated SSs are located;
   transmission occasion information or transmission time information of the associated SSs;
   a CORESET pool index CORESETPoolIndex;
   identification ID information of a transmission reception point TRP;
   identification information of a channel group;
   identification information of a CORESET group; and
   identification information of a physical uplink control channel PUCCH resource group.

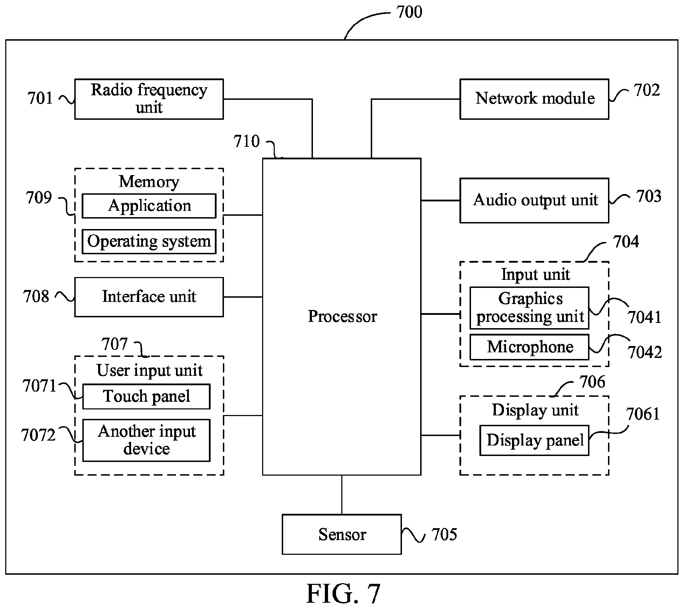

The terminal embodiment is corresponding to the terminal side method embodiment, each implementation process and implementation of the method embodiment may be applied to the terminal embodiment, and a same technical effect can be achieved. Specifically, FIG. 7 is a schematic diagram of a hardware structure of a terminal according to an embodiment of this application.

The terminal 700 includes but is not limited to: at least some of the following components: a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) that supplies power to each component. The power supply may be logically connected to the processor 710 through a power management system, to implement functions such as charging and discharging management, and power consumption management by using the power management system. The terminal structure shown in FIG. 7 constitutes no limitation on the terminal, and the terminal may include more or fewer components than those shown in the figure, or combine some components, or have different component arrangements. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein again.

In this embodiment of this application, after receiving downlink data from a network side device, the radio frequency unit 701 may transmit the downlink data to the processor 710 for processing. In addition, the radio frequency unit 701 may send uplink data to the network side device. Generally, the radio frequency unit 701 includes but is not limited to an antenna, an amplifier, a transceiver, a coupler, a low noise amplifier, a duplexer, and the like.

The memory 709 may be configured to store a software program or instructions and various data. The memory 709 may mainly include a first storage area for storing a program or instructions and a second storage area for storing data. The first storage area may store an operating system, and an application or instructions required by at least one function (for example, a sound playing function or an image playing function). In addition, the memory 709 may be a volatile memory or a non-volatile memory, or the memory 709 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in this embodiment of this application includes but is not limited to these memories and any memory of another proper type.

The processor 710 may include one or more processing units. Optionally, an application processor and a modem processor are integrated into the processor 710. The application processor mainly processes an operating system, a user interface, an application, or the like. The modem processor mainly processes a wireless communication signal, for example, a baseband processor. It can be understood that the foregoing modem processor may not be integrated into the processor 710.

The radio frequency unit 701 is configured to obtain common beam information indicated by a network side device, where the common beam information includes N first transmission configuration indicator TCI states, the first TCI state is a joint TCI state or a separate downlink DL TCI state, and N is an integer greater than or equal to 1; and
the processor 710 is configured to determine a target TCI state of a target downlink channel based on target information. The target information includes at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, where
the first identification information includes at least one of the following:
   identification information of a control resource set CORESET;
   identification information of associated search spaces SS, where the associated SSs are used for repetition transmission of a PDCCH;
   identification information of a CORESET in which the associated SSs are located;
   transmission occasion information or transmission time information of the associated SSs;
   a CORESET pool index CORESETPoolIndex;
   identification ID information of a transmission reception point TRP;
   identification information of a channel group;
   identification information of a CORESET group; and
   identification information of a physical uplink control channel PUCCH resource group.

Optionally, in a case that the target information includes the quantity of the first TCI states, the determining a target TCI state of a target downlink channel based on target information performed by the processor 710 includes:
in a case that the terminal uses single-beam transmission, if the quantity of the first TCI states is one, determining that the transmission mode of the target downlink channel is single-beam transmission;
in a case that the terminal uses single-beam transmission, if the quantity of the first TCI states is at least two, determining that the transmission mode of the target downlink channel is single-beam transmission, a repetition transmission mode, or a multi-beam simultaneous transmission mode;
in a case that the terminal uses a repetition transmission mode or a multi-beam simultaneous transmission mode, if the quantity of the first TCI states is one, determining that the transmission mode of the target downlink channel is single-beam transmission, the repetition transmission mode, or the multi-beam simultaneous transmission mode; or
in a case that the terminal uses a repetition transmission mode or a multi-beam simultaneous transmission mode, if the quantity of the first TCI states is at least two, determining that the transmission mode of the target downlink channel is the repetition transmission mode or the multi-beam simultaneous transmission mode.

Optionally, in a case that the time-domain behavior of the target downlink channel is a periodic downlink channel, or the time-domain behavior of the carried information is periodic information, the target TCI state includes at least one of the following:
a TCI state other than the first TCI state in a TCI state pool or an original TCI state of the target downlink channel;
a first TCI state corresponding to the first identification information associated with the target downlink channel;
a first TCI state indicated by first indication information from the network side device; and
a first preset TCI state, where
the first preset TCI state includes at least one of the following:
   a first TCI state arranged at a preset location in all of the first TCI states; and
   a first TCI state corresponding to preset first identification information.

Optionally, in a case that the quantity of the first TCI states is greater than K, where K is a quantity of TCI states required by the target downlink channel, the determining a target TCI state of a target downlink channel based on target information performed by the processor 710 includes:
determining that K first TCI states arranged at preset locations are the target TCI states of the target downlink channel; or
determining the target TCI state of the target downlink channel based on an indication of second indication information from the network side device, where the second indication information indicates K first TCI states.

Optionally, the second indication information is carried in a first signaling field, and the first signaling field is a signaling field in media access control MAC control element CE signaling or DCI signaling.

Optionally, the first signaling field is used for a DCI format 1_1 or a DCI format 1_2.

Optionally, the first signaling field takes effect or exists when a preset condition is met, and the preset condition includes at least one of the following:
the network side device configures the first signaling field;
the network side device indicates at least two first TCI states by using DCI signaling; and
at least one of TCI codepoints activated by the network side device by using a media access control MAC control element CE corresponds to at least two TCI states.

Optionally, the first TCI state includes N joint TCI states or N separate downlink DL TCI states, and N is an integer greater than 1.

Optionally, in a case that the target downlink channel has M TCI states, if the quantity of the first TCI states is at least M, the target TCI states are at least M of the first TCI states, and M is an integer greater than or equal to 2;
in a case that the target downlink channel has M TCI states, if N is less than M, the target TCI states are M original TCI states of the target downlink channel, or the target TCI states are (M-N) original TCI states of the target downlink channel and the N first TCI states, or the target TCI states are the N first TCI states; or
in a case that the target downlink channel has one TCI state, if the quantity of the first TCI states is at least one, the target TCI state is at least one first TCI state.

Optionally, the type of the target downlink channel includes at least one of the following: a physical downlink control channel PDCCH, a physical downlink shared channel PDSCH, a DL reference signal RS resource, a PDCCH in a first CORESET, a channel scheduled or triggered by the PDCCH in the first CORESET, and a channel associated with the first CORESET; and
the first CORESET includes at least one of the following: a CORESET #0, a CORESET associated with only a common search space CSS, a CORESET associated with only a UE-specific search space USS, and a CORESET associated with the USS and the CSS.

Optionally, the PDCCH includes at least one of the following:
all PDCCHs, a PDCCH in a control resource set CORESET dedicated to the terminal, a PDCCH in the CORESET associated with only the USS, a PDCCH in the CORESET associated with only the CSS, a PDCCH in the CORESET associated with the USS and the CSS, and a PDCCH in a CORESET other than the CORESET #0;
   and/or
the PDSCH includes at least one of the following:
a PDSCH scheduled by the PDCCH, a PDSCH associated with the PDCCH, and a PDSCH dedicated to the terminal.

Optionally, before the processor 710 determines a target TCI state of a target downlink channel based on target information:
the radio frequency unit 701 is further configured to receive third indication information from the network side device; and
the processor 710 is further configured to determine the transmission mode of the target downlink channel based on the third indication information, where the transmission mode includes: a preset transmission mode, the repetition transmission mode, the multi-beam simultaneous transmission mode, or a transmission mode in which the preset transmission mode, the repetition transmission mode, and the multi-beam simultaneous transmission mode are dynamically switched, where the preset transmission mode is non-repetitive single-beam transmission.

Optionally, in a case that the quantity of the first TCI states is greater than 1, if the type of the target downlink channel is a PDCCH, and the transmission mode is a repetition transmission mode, the target TCI state includes at least one of the following:
a first TCI state corresponding to same first identification information as first SSs, where the first SSs are at least two associated SSs in which the target downlink channel is located; and
all of the first TCI states, where each of the first TCI states is applied, based on the correspondence between the first TCI state and the first identification information, to the target downlink channel transmitted on the associated SSs;
   or
in a case that the quantity of the first TCI states is equal to 1, if the type of the target downlink channel is a PDCCH, and the transmission mode is a repetition transmission mode, the determining a target TCI state of a target downlink channel based on target information performed by the processor 710 includes at least one of the following:
   determining that a repetition transmission configuration of the target downlink channel is invalid;
   determining one of the at least two associated SSs in which the target downlink channel is located, to transmit the target downlink channel;
   determining one of at least two CORESETs corresponding to the at least two associated SSs in which the target downlink channel is located, to transmit the target downlink channel;
   determining to perform PDCCH repetition transmission based on the first TCI state;
   determining that the target TCI state includes at least two original TCI states of the target downlink channel; and
   determining to update a second preset TCI state in the at least two original TCI states of the target downlink channel to the first TCI state, where the second preset TCI state corresponds to the same first identification information as the first TCI state; the second preset TCI state is one of the at least two original TCI states of the target downlink channel that is at a preset location; or the second preset TCI state is associated with the first TCI state.

Optionally, in a multi-DCI mode, CORESETs in which the at least two associated SSs are located are in different pieces of CORESETPoolIndex; and
in a single-DCI mode, the at least two associated SSs correspond to different pieces of the first identification information.

Optionally, before the processor 710 determines a target TCI state of a target downlink channel based on target information:
the radio frequency unit 701 is further configured to receive first configuration information from the network side device, where
the first configuration information is used to configure SSs in CORESETs corresponding to different pieces of the first identification information to be associated with each other.

Optionally, in a case that the quantity of the first TCI states is greater than 1, if the transmission mode of the target downlink channel is a multi-beam simultaneous transmission mode, the target TCI state includes at least one of the following:
at least two first TCI states of a CORESET in which the target downlink channel is located;
at least two first TCI states corresponding to at least two pieces of the first identification information;
at least two TCI states of the target downlink channel that are determined based on the arrangement sequence or the location of the first TCI state;
all of the first TCI states; and
a first TCI state corresponding to a first PDCCH, where the first PDCCH includes: a PDCCH that schedules the target downlink channel, a PDCCH that schedules the target downlink channel and that is in a multi-beam simultaneous transmission mode, any PDCCH, or any PDCCH in a multi-beam simultaneous transmission mode;
   or
in a case that the quantity of the first TCI states is equal to 1, if the transmission mode of the target downlink channel is a multi-beam simultaneous transmission mode, the determining a target TCI state of a target downlink channel based on target information performed by the processor 710 includes at least one of the following:
   determining that a multi-beam simultaneous transmission configuration of the target downlink channel is invalid;
   determining that the target downlink channel performs transmission based on the first TCI state;
   determining that the target TCI state includes at least two original TCI states of the target downlink channel; and
   determining to update a third preset TCI state in the at least two original TCI states of the target downlink channel to the first TCI state, where the third preset TCI state corresponds to the same first identification information as the first TCI state; the third preset TCI state is one of the at least two original TCI states of the target downlink channel that is at a preset location; or the third preset TCI state is associated with the first TCI state.

Optionally, in a case that the target TCI state includes at least two first TCI states:
the processor 710 is further configured to determine a QCL parameter of the target downlink channel based on a target parameter, where the target parameter includes all QCL parameters of a fourth preset TCI state in the at least two first TCI states and an average delay parameter and a delay spread parameter of QCL-TypeA parameters of a TCI state other than the fourth preset TCI state in the at least two first TCI states.

Optionally, in a case that the type of the target downlink channel is a PDCCH, and the transmission mode is a preset transmission mode, the target TCI state includes a fifth preset TCI state, where the fifth preset TCI state includes at least one of the following:
a first TCI state arranged at a preset location in all of the first TCI states;
a first TCI state corresponding to preset first identification information;
a first TCI state corresponding to the first identification information associated with the target downlink channel; and
a first TCI state indicated by the network side device from all of the first TCI states.

Optionally, in a case that the quantity of the first TCI states is greater than 1, if the type of the target downlink channel is a PDSCH or a DL RS resource, the target TCI state includes at least one of the following:
all of the first TCI states;
at least one first TCI state indicated by the network side device from all of the first TCI states; and
a sixth preset TCI state, where
the sixth preset TCI state includes at least one of the following:
   a first TCI state corresponding to a first codepoint or at least one of first TCI states corresponding to the first codepoint, where the first codepoint is a codepoint indicated by a TCI field in DCI indicating the first TCI state;
   a first TCI state corresponding to preset first identification information;
   a first TCI state that is the same as a TCI state of a PDCCH on which DCI that schedules the target downlink channel is located;
   a first TCI state corresponding to first identification information associated with a PDCCH on which DCI that schedules the target downlink channel is located;
   a first TCI state corresponding to the first identification information associated with the target downlink channel;
   a first TCI state that is determined based on a second codepoint indicated by the network side device and that is dedicated to the target downlink channel, where the second codepoint is a codepoint indicated by a TCI field in DCI that schedules the target downlink channel, and the first TCI state corresponding to the second codepoint is a subset or a full set of the first TCI state corresponding to the first codepoint; and
   a first TCI state that is the same as that of a PDCCH for repetition transmission or multi-beam simultaneous transmission, or at least one of first TCI states of the PDCCH for repetition transmission or multi-beam simultaneous transmission, where the PDCCH for the repetition transmission or the multi-beam simultaneous transmission is a PDCCH on which DCI indicating the first TCI state is located, or a PDCCH that schedules the target downlink channel;
      or
   in a case that the quantity of the first TCI states is equal to 1, if the type of the target downlink channel is a PDSCH or a DL RS resource, the determining a target TCI state of a target downlink channel based on target information performed by the processor 710 includes at least one of the following:
      in a case that the target downlink channel corresponds to the same first identification information as the first TCI state, determining that the target TCI state includes the first TCI state;
      in a case that the target downlink channel and the first TCI state correspond to different pieces of the first identification information, determining that the target TCI state includes an original TCI state of the target downlink channel or determining that the target downlink channel stops transmission;
      determining that the target TCI state includes a TCI state of a PDCCH that schedules or triggers the target downlink channel; and
      in a case that the target downlink channel has at least two original TCI states, determining the target TCI state as: the at least two original TCI states of the target downlink channel or the first TCI state, or determining, by the terminal, to update a seventh preset TCI state in the at least two original TCI states of the target downlink channel to the first TCI state, where the seventh preset TCI state corresponds to the same first identification information as the first TCI state; the seventh preset TCI state is one of the at least two original TCI states of the target downlink channel that is at a preset location; or the seventh preset TCI state is associated with the first TCI state.

Optionally, in a case that the transmission mode of the target downlink channel is a repetition transmission mode, or the type of the target downlink channel is a PDSCH or a DL RS resource, and target DCI that schedules the target downlink channel simultaneously schedules at least two PDSCHs or at least two DL RS resources:
after obtaining common beam information indicated by a network side device, the radio frequency unit 701 is further configured to send first feedback information to the network side device at a first moment, where the first feedback information indicates that the terminal has correctly received the common beam information; and
the processor 710 is further configured to determine that repetition transmission of the target downlink channel in a slot after a second moment, or a PDSCH or a DL RS resource that is scheduled by the target DCI and that is in a slot after the second moment uses the common beam information for transmission, where a time difference between the second moment and the first moment is first preset duration, and the second moment is later than the first moment.

The terminal 700 provided in this embodiment of this application can implement processes performed by the apparatus for determining a downlink TCI state 400 shown in FIG. 4, and a same beneficial effect can be achieved. To avoid repetition, details are not described herein again.

An embodiment of this application further provides a network side device, including a processor and a communications interface, where the communications interface is configured to indicate common beam information to a terminal, the common beam information includes N first transmission configuration indicator TCI states, the first TCI state is a joint TCI state or a separate downlink DL TCI state, and N is an integer greater than or equal to 1; and the processor is configured to determine a target TCI state of a target downlink channel based on target information, where the target information includes at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, where
the first identification information includes at least one of the following:
   identification information of a control resource set CORESET;
   identification information of associated search spaces SS, where the associated SSs are used for repetition transmission of a PDCCH;
   identification information of a CORESET in which the associated SSs are located;
   transmission occasion information or transmission time information of the associated SSs;
   a CORESET pool index CORESETPoolIndex;
   identification ID information of a transmission reception point TRP;
   identification information of a channel group;
   identification information of a CORESET group; and
   identification information of a physical uplink control channel PUCCH resource group.

This network side device embodiment is corresponding to the foregoing method embodiment of the network side device. Each implementation process and implementation of the foregoing method embodiment are applicable to this network side device embodiment, and a same technical effect can be achieved.

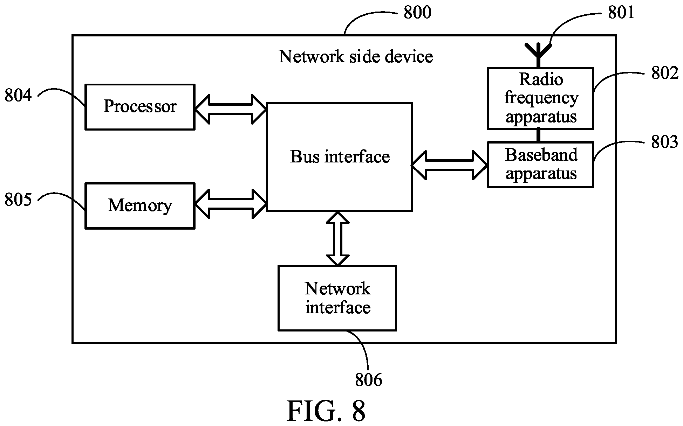

Specifically, an embodiment of this application further provides a network side device. As shown in FIG. 8, the network side device 800 includes: an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the to-be-sent information to the radio frequency apparatus 802. After processing the received information, the radio frequency apparatus 802 sends the information through the antenna 801.

In the foregoing embodiment, a method performed by the network side device may be implemented in the baseband apparatus 803. The baseband apparatus 803 includes a baseband processor.

The baseband apparatus 803 may include, for example, at least one baseband board. A plurality of chips are disposed on the baseband board. As shown in FIG. 8, one chip is, for example, a baseband processor, connected to the memory 805 through a bus interface, to invoke a program in the memory 805, thereby performing operations of the network device shown in the foregoing method embodiment.

The network side device may further include a network interface 806. The interface is, for example, a common public radio interface (common public radio interface, CPRI).

Specifically, the network side device 800 in this embodiment of the present application further includes: instructions or a program stored in the memory 805 and runnable on the processor 804. The processor 804 invokes the instructions or the program in the memory 805 to perform the method performed by the modules shown in FIG. 5, and a same technical effect is achieved. To avoid repetition, details are not described herein again.

An embodiment of this application further provides a readable storage medium, where the readable storage medium stores a program or an instruction, and when the program or the instructions are executed by a processor, the processes of the method for determining a downlink TCI state embodiment shown in FIG. 2 or FIG. 3 are implemented, and a same technical effect can be achieved. To avoid repetition, details are not described herein again.

The processor is a processor in the terminal in the foregoing embodiments. The readable storage medium includes a computer-readable storage medium, such as a computer read-only memory (ROM), a random access memory (RAM), a magnetic disk, or an optical disc.

An embodiment of this application also provides a chip. The chip includes a processor and a communications interface. The communications interface is coupled to the processor, the processor is configured to run a program or an instruction, to implement the processes of the method for determining a downlink TCI state embodiment shown in FIG. 2 or FIG. 3, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application also provides a computer program/program product. The computer program/program product is stored in a storage medium, and the computer program/program product is executed by at least one processor to implement the processes of the method for determining a downlink TCI state embodiment shown in FIG. 2 or FIG. 3, and a same technical effect can be achieved. To avoid repetition, details are not described herein again.

An embodiment of this application further provides a wireless communications system, including: a terminal and a network side device, where the terminal may be configured to perform steps of the method for determining a downlink TCI state shown in FIG. 2, and the network side device may be configured to perform steps of the method for determining a downlink TCI state shown in FIG. 3.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by a statement "includes a..." does not preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A method for determining a downlink TCI state, wherein the method comprises:
obtaining, by a terminal, common beam information indicated by a network side device, wherein the common beam information comprises N first transmission configuration indicator TCI states, the first TCI state is a joint TCI state or a separate downlink DL TCI state, and N is an integer greater than or equal to 1; and
determining, by the terminal, a target TCI state of a target downlink channel based on target information, wherein the target information comprises at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, wherein
the first identification information comprises at least one of the following:
identification information of a control resource set CORESET;
identification information of associated search spaces SS, wherein the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

2. The method according to claim 1, wherein in a case that the target information comprises the quantity of the first TCI states, the determining, by the terminal, a target TCI state of a target downlink channel based on target information comprises:
in a case that the terminal uses single-beam transmission, if the quantity of the first TCI states is one, determining, by the terminal, that the transmission mode of the target downlink channel is single-beam transmission;
in a case that the terminal uses single-beam transmission, if the quantity of the first TCI states is at least two, determining, by the terminal, that the transmission mode of the target downlink channel is single-beam transmission, a repetition transmission mode, or a multi-beam simultaneous transmission mode;
in a case that the terminal uses a repetition transmission mode or a multi-beam simultaneous transmission mode, if the quantity of the first TCI states is one, determining, by the terminal, that the transmission mode of the target downlink channel is single-beam transmission, the repetition transmission mode, or the multi-beam simultaneous transmission mode; or
in a case that the terminal uses a repetition transmission mode or a multi-beam simultaneous transmission mode, if the quantity of the first TCI states is at least two, determining, by the terminal, that the transmission mode of the target downlink channel is the repetition transmission mode or the multi-beam simultaneous transmission mode.

3. The method according to claim 1, wherein in a case that the time-domain behavior of the target downlink channel is a periodic downlink channel, or the time-domain behavior of the carried information is periodic information, the target TCI state comprises at least one of the following:
a TCI state other than the first TCI state in a TCI state pool or an original TCI state of the target downlink channel;
a first TCI state corresponding to the first identification information associated with the target downlink channel;
a first TCI state indicated by first indication information from the network side device; and
a first preset TCI state, wherein
the first preset TCI state comprises at least one of the following:
a first TCI state arranged at a preset location in all of the first TCI states; and
a first TCI state corresponding to preset first identification information.

4. The method according to claim 1, wherein in a case that the quantity of the first TCI states is greater than K, wherein K is a quantity of TCI states required by the target downlink channel, the determining, by the terminal, a target TCI state of a target downlink channel based on target information comprises:
determining, by the terminal, that K first TCI states arranged at preset locations are the target TCI states of the target downlink channel; or
determining, by the terminal, the target TCI state of the target downlink channel based on an indication of second indication information from the network side device, wherein the second indication information indicates K first TCI states.

5. The method according to claim 4, wherein the second indication information is carried in a first signaling field, and the first signaling field is a signaling field in media access control MAC control element CE signaling or DCI signaling.

6. The method according to claim 5, wherein the first signaling field is used for a DCI format 1_1 or a DCI format 1_2.

7. The method according to claim 5, wherein the first signaling field takes effect or exists when a preset condition is met, and the preset condition comprises at least one of the following:
the network side device configures the first signaling field;
the network side device indicates at least two first TCI states by using DCI signaling; and
at least one of TCI codepoints activated by the network side device by using a media access control MAC control element CE corresponds to at least two TCI states.

8. The method according to any one of claims 1 to 7, wherein
in a case that the target downlink channel has M TCI states, if the quantity of the first TCI states is at least M, the target TCI states are at least M of the first TCI states, and M is an integer greater than or equal to 2;
in a case that the target downlink channel has M TCI states, if N is less than M, the target TCI states are M original TCI states of the target downlink channel, or the target TCI states are (M-N) original TCI states of the target downlink channel and the N first TCI states, or the target TCI states are the N first TCI states; or
in a case that the target downlink channel has one TCI state, if the quantity of the first TCI states is at least one, the target TCI state is at least one first TCI state.

9. The method according to any one of claims 1 to 7, wherein the type of the target downlink channel comprises at least one of the following: a physical downlink control channel PDCCH, a physical downlink shared channel PDSCH, a DL reference signal RS resource, a PDCCH in a first CORESET, a channel scheduled or triggered by the PDCCH in the first CORESET, and a channel associated with the first CORESET; and
the first CORESET comprises at least one of the following: a CORESET #0, a CORESET associated with only a common search space CSS, a CORESET associated with only a UE-specific search space USS, and a CORESET associated with the USS and the CSS.

10. The method according to claim 9, wherein
the PDCCH comprises at least one of the following:
all PDCCHs, a PDCCH in a control resource set CORESET dedicated to the terminal, a PDCCH in the CORESET associated with only the USS, a PDCCH in the CORESET associated with only the CSS, a PDCCH in the CORESET associated with the USS and the CSS, and a PDCCH in a CORESET other than the CORESET #0;
and/or
the PDSCH comprises at least one of the following:
a PDSCH scheduled by the PDCCH, a PDSCH associated with the PDCCH, and a PDSCH dedicated to the terminal.

11. The method according to any one of claims 1 to 7, wherein before the determining, by the terminal, a target TCI state of a target downlink channel based on target information, the method further comprises:
receiving, by the terminal, third indication information from the network side device, and determining the transmission mode of the target downlink channel based on the third indication information, wherein the transmission mode comprises: a preset transmission mode, the repetition transmission mode, the multi-beam simultaneous transmission mode, or a transmission mode in which the preset transmission mode, the repetition transmission mode, and the multi-beam simultaneous transmission mode are dynamically switched, wherein the preset transmission mode is non-repetitive single-beam transmission.

12. The method according to claim 1, wherein
in a case that the quantity of the first TCI states is greater than 1, if the type of the target downlink channel is a PDCCH, and the transmission mode is a repetition transmission mode, the target TCI state comprises at least one of the following:
a first TCI state corresponding to same first identification information as first SSs, wherein the first SSs are at least two associated SSs in which the target downlink channel is located; and
all of the first TCI states, wherein each of the first TCI states is applied, based on the correspondence between the first TCI state and the first identification information, to the target downlink channel transmitted on the associated SSs;
or
in a case that the quantity of the first TCI states is equal to 1, if the type of the target downlink channel is a PDCCH, and the transmission mode is a repetition transmission mode, the determining, by the terminal, a target TCI state of a target downlink channel based on target information comprises at least one of the following:
determining, by the terminal, that a repetition transmission configuration of the target downlink channel is invalid;
determining, by the terminal, one of the at least two associated SSs in which the target downlink channel is located, to transmit the target downlink channel;
determining, by the terminal, one of at least two CORESETs corresponding to the at least two associated SSs in which the target downlink channel is located, to transmit the target downlink channel;
determining, by the terminal, to perform PDCCH repetition transmission based on the first TCI state;
determining, by the terminal, that the target TCI state comprises at least two original TCI states of the target downlink channel; and
determining, by the terminal, to update a second preset TCI state in the at least two original TCI states of the target downlink channel to the first TCI state, wherein the second preset TCI state corresponds to the same first identification information as the first TCI state; the second preset TCI state is one of the at least two original TCI states of the target downlink channel that is at a preset location; or the second preset TCI state is associated with the first TCI state.

13. The method according to claim 12, wherein in a multi-DCI mode, CORESETs in which the at least two associated SSs are located are in different pieces of CORESETPoolIndex; and
in a single-DCI mode, the at least two associated SSs correspond to different pieces of the first identification information.

14. The method according to claim 13, wherein before the determining, by the terminal, a target TCI state of a target downlink channel based on target information, the method further comprises:
receiving, by the terminal, first configuration information from the network side device, wherein
the first configuration information is used to configure SSs in CORESETs corresponding to different pieces of the first identification information to be associated with each other.

15. The method according to claim 1, wherein in a case that the quantity of the first TCI states is greater than 1, if the transmission mode of the target downlink channel is a multi-beam simultaneous transmission mode, the target TCI state comprises at least one of the following:
at least two first TCI states of a CORESET in which the target downlink channel is located;
at least two first TCI states corresponding to at least two pieces of the first identification information;
at least two TCI states of the target downlink channel that are determined based on the arrangement sequence or the location of the first TCI state;
all of the first TCI states; and
a first TCI state corresponding to a first PDCCH, wherein the first PDCCH comprises: a PDCCH that schedules the target downlink channel, a PDCCH that schedules the target downlink channel and that is in a multi-beam simultaneous transmission mode, any PDCCH, or any PDCCH in a multi-beam simultaneous transmission mode;
or
in a case that the quantity of the first TCI states is equal to 1, if the transmission mode of the target downlink channel is a multi-beam simultaneous transmission mode, the determining, by the terminal, a target TCI state of a target downlink channel based on target information comprises at least one of the following:
determining, by the terminal, that a multi-beam simultaneous transmission configuration of the target downlink channel is invalid;
determining, by the terminal, that the target downlink channel performs transmission based on the first TCI state;
determining, by the terminal, that the target TCI state comprises at least two original TCI states of the target downlink channel; and
determining, by the terminal, to update a third preset TCI state in the at least two original TCI states of the target downlink channel to the first TCI state, wherein the third preset TCI state corresponds to the same first identification information as the first TCI state; the third preset TCI state is one of the at least two original TCI states of the target downlink channel that is at a preset location; or the third preset TCI state is associated with the first TCI state.

16. The method according to claim 15, wherein in a case that the target TCI state comprises at least two first TCI states, the method further comprises:
determining, by the terminal, a QCL parameter of the target downlink channel based on a target parameter, wherein the target parameter comprises all QCL parameters of a fourth preset TCI state in the at least two first TCI states and an average delay parameter and a delay spread parameter of QCL-TypeA parameters of a TCI state other than the fourth preset TCI state in the at least two first TCI states.

17. The method according to claim 1, wherein in a case that the type of the target downlink channel is a PDCCH, and the transmission mode is a preset transmission mode, the target TCI state comprises a fifth preset TCI state, wherein the fifth preset TCI state comprises at least one of the following:
a first TCI state arranged at a preset location in all of the first TCI states;
a first TCI state corresponding to preset first identification information;
a first TCI state corresponding to the first identification information associated with the target downlink channel; and
a first TCI state indicated by the network side device from all of the first TCI states.

18. The method according to claim 1, wherein in a case that the quantity of the first TCI states is greater than 1, if the type of the target downlink channel is a PDSCH or a DL RS resource, the target TCI state comprises at least one of the following:
all of the first TCI states;
at least one first TCI state indicated by the network side device from all of the first TCI states; and
a sixth preset TCI state, wherein
the sixth preset TCI state comprises at least one of the following:
a first TCI state corresponding to a first codepoint or at least one of first TCI states corresponding to the first codepoint, wherein the first codepoint is a codepoint indicated by a TCI field in DCI indicating the first TCI state;
a first TCI state corresponding to preset first identification information;
a first TCI state that is the same as a TCI state of a PDCCH on which DCI that schedules the target downlink channel is located;
a first TCI state corresponding to first identification information associated with a PDCCH on which DCI that schedules the target downlink channel is located;
a first TCI state corresponding to the first identification information associated with the target downlink channel;
a first TCI state that is determined based on a second codepoint indicated by the network side device and that is dedicated to the target downlink channel, wherein the second codepoint is a codepoint indicated by a TCI field in DCI that schedules the target downlink channel, and the first TCI state corresponding to the second codepoint is a subset or a full set of the first TCI state corresponding to the first codepoint; and
a first TCI state that is the same as that of a PDCCH for repetition transmission or multi-beam simultaneous transmission, or at least one of first TCI states of the PDCCH for repetition transmission or multi-beam simultaneous transmission, wherein the PDCCH for the repetition transmission or the multi-beam simultaneous transmission is a PDCCH on which DCI indicating the first TCI state is located, or a PDCCH that schedules the target downlink channel;
or
in a case that the quantity of the first TCI states is equal to 1, if the type of the target downlink channel is a PDSCH or a DL RS resource, the determining, by the terminal, a target TCI state of a target downlink channel based on target information comprises at least one of the following:
in a case that the target downlink channel corresponds to the same first identification information as the first TCI state, determining, by the terminal, that the target TCI state comprises the first TCI state;
in a case that the target downlink channel and the first TCI state correspond to different pieces of the first identification information, determining, by the terminal, that the target TCI state comprises an original TCI state of the target downlink channel or determining that the target downlink channel stops transmission;
determining, by the terminal, that the target TCI state comprises a TCI state of a PDCCH that schedules or triggers the target downlink channel; and
in a case that the target downlink channel has at least two original TCI states, determining, by the terminal, the target TCI state as: the at least two original TCI states of the target downlink channel or the first TCI state, or determining, by the terminal, to update a seventh preset TCI state in the at least two original TCI states of the target downlink channel to the first TCI state, wherein the seventh preset TCI state corresponds to the same first identification information as the first TCI state; the seventh preset TCI state is one of the at least two original TCI states of the target downlink channel that is at a preset location; or the seventh preset TCI state is associated with the first TCI state.

19. The method according to claim 1, wherein in a case that the transmission mode of the target downlink channel is a repetition transmission mode, or the type of the target downlink channel is a PDSCH or a DL RS resource, and target DCI that schedules the target downlink channel simultaneously schedules at least two PDSCHs or at least two DL RS resources:
after the obtaining, by a terminal, common beam information indicated by a network side device, the method further comprises:
sending, by the terminal, first feedback information to the network side device at a first moment, wherein the first feedback information indicates that the terminal has correctly received the common beam information; and
determining, by the terminal, that repetition transmission of the target downlink channel in a slot after a second moment, or a PDSCH or a DL RS resource that is scheduled by the target DCI and that is in a slot after the second moment uses the common beam information for transmission, wherein a time difference between the second moment and the first moment is first preset duration, and the second moment is later than the first moment.

20. An apparatus for determining a downlink TCI state, wherein the apparatus is used in a terminal, and comprises:
a first obtaining module, configured to obtain common beam information indicated by a network side device, wherein the common beam information comprises N first transmission configuration indicator TCI states, the first TCI state is a joint TCI state or a separate downlink DL TCI state, and N is an integer greater than or equal to 1; and
a first determining module, configured to determine a target TCI state of a target downlink channel based on target information, wherein the target information comprises at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, wherein
the first identification information comprises at least one of the following:
identification information of a control resource set CORESET;
identification information of associated search spaces SS, wherein the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

21. A method for determining a downlink TCI state, wherein the method comprises:
indicating, by a network side device, common beam information to a terminal, wherein the common beam information comprises N first transmission configuration indicator TCI states, the first TCI state is a joint TCI state or a separate downlink DL TCI state, and N is an integer greater than or equal to 1; and
determining, by the network side device, a target TCI state of a target downlink channel based on target information, wherein the target information comprises at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, wherein
the first identification information comprises at least one of the following:
identification information of a control resource set CORESET;
identification information of associated search spaces SS, wherein the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

22. The method according to claim 21, wherein in a case that the target information comprises the quantity of the first TCI states, the determining, by the network side device, a target TCI state of a target downlink channel based on target information comprises:
in a case that the terminal uses single-beam transmission, if the quantity of the first TCI states is one, determining, by the network side device, that the transmission mode of the target downlink channel is single-beam transmission;
in a case that the terminal uses single-beam transmission, if the quantity of the first TCI states is at least two, determining, by the network side device, that the transmission mode of the target downlink channel is single-beam transmission, a repetition transmission mode, or a multi-beam simultaneous transmission mode;
in a case that the terminal uses a repetition transmission mode or a multi-beam simultaneous transmission mode, if the quantity of the first TCI states is one, determining, by the network side device, that the transmission mode of the target downlink channel is single-beam transmission, the repetition transmission mode, or the multi-beam simultaneous transmission mode; or
in a case that the terminal uses a repetition transmission mode or a multi-beam simultaneous transmission mode, if the quantity of the first TCI states is at least two, determining, by the network side device, that the transmission mode of the target downlink channel is the repetition transmission mode or the multi-beam simultaneous transmission mode.

23. The method according to claim 21, wherein in a case that the time-domain behavior of the target downlink channel is a periodic downlink channel, or the time-domain behavior of the carried information is periodic information, the target TCI state comprises at least one of the following:
a TCI state other than the first TCI state in a TCI state pool or an original TCI state of the target downlink channel;
a first TCI state corresponding to the first identification information associated with the target downlink channel;
a first TCI state indicated by first indication information from the network side device; and
a first preset TCI state, wherein
the first preset TCI state comprises at least one of the following:
a first TCI state arranged at a preset location in all of the first TCI states; and
a first TCI state corresponding to preset first identification information.

24. The method according to claim 21, wherein in a case that the quantity of the first TCI states is greater than K, wherein K is a quantity of TCI states required by the target downlink channel, the determining, by the network side device, a target TCI state of a target downlink channel based on target information comprises:
determining, by the network side device, that K first TCI states arranged at preset locations are the target TCI states of the target downlink channel; or
determining, by the network side device from all first TCI states, that K first TCI states are the target TCI states, and sending second indication information to the terminal, wherein the second indication information indicates the K first TCI states.

25. The method according to claim 24, wherein the second indication information is carried in a first signaling field, and the first signaling field is a signaling field in media access control MAC control element CE signaling or DCI signaling.

26. The method according to claim 25, wherein the first signaling field is used for a DCI format 1_1 or a DCI format 1_2.

27. The method according to claim 26, wherein the first signaling field takes effect or exists when a preset condition is met, and the preset condition comprises at least one of the following:
the network side device configures the first signaling field;
the network side device indicates at least two first TCI states by using DCI signaling; and
at least one of TCI codepoints activated by the network side device by using a MAC CE corresponds to at least two TCI states.

28. The method according to any one of claims 21 to 27, wherein
in a case that the target downlink channel has M TCI states, if the quantity of the first TCI states is at least M, the target TCI states are at least M of the first TCI states, and M is an integer greater than or equal to 2;
in a case that the target downlink channel has M TCI states, if N is less than M, the target TCI states are M original TCI states of the target downlink channel, or the target TCI states are (M-N) original TCI states of the target downlink channel and the N first TCI states, or the target TCI states are the N first TCI states; or
in a case that the target downlink channel has one TCI state, if the quantity of the first TCI states is at least one, the target TCI state is at least one first TCI state.

29. The method according to any one of claims 21 to 27, wherein the type of the target downlink channel comprises at least one of the following: a physical downlink control channel PDCCH, a physical downlink shared channel PDSCH, a DL reference signal RS resource, a PDCCH in a first CORESET, a channel scheduled or triggered by the PDCCH in the first CORESET, and a channel associated with the first CORESET; and
the first CORESET comprises at least one of the following: a CORESET #0, a CORESET associated with only a common search space CSS, a CORESET associated with only a UE-specific search space USS, and a CORESET associated with the USS and the CSS.

30. The method according to claim 29, wherein
the PDCCH comprises at least one of the following:
all PDCCHs, a PDCCH in a control resource set CORESET dedicated to the terminal, a PDCCH in the CORESET associated with only the USS, a PDCCH in the CORESET associated with only the CSS, a PDCCH in the CORESET associated with the USS and the CSS, and a PDCCH in a CORESET other than the CORESET #0;
and/or
the PDSCH comprises at least one of the following:
a PDSCH scheduled by the PDCCH, a PDSCH associated with the PDCCH, and a PDSCH dedicated to the terminal.

31. The method according to any one of claims 21 to 27, wherein the transmission mode comprises: a preset transmission mode, the repetition transmission mode, the multi-beam simultaneous transmission mode, or a transmission mode in which the preset transmission mode, the repetition transmission mode, and the multi-beam simultaneous transmission mode are dynamically switched, wherein the preset transmission mode is non-repetitive single-beam transmission;
the determining, by the network side device, a target TCI state of a target downlink channel based on target information comprises:
determining, by the network side device, the target TCI state of the target downlink channel from the first TCI state based on the transmission mode of the target downlink channel; and
the method further comprises:
sending, by the network side device, third indication information to the terminal, wherein the third indication information indicates the transmission mode of the target downlink channel.

32. The method according to claim 21, wherein in a case that the quantity of the first TCI states is greater than 1, if the type of the target downlink channel is a PDCCH, and the transmission mode is a repetition transmission mode, the target TCI state comprises at least one of the following:
a first TCI state corresponding to same first identification information as first SSs, wherein the first SSs are at least two associated SSs in which the target downlink channel is located; and
all of the first TCI states, wherein each of the first TCI states is applied, based on the correspondence between the first TCI state and the first identification information, to the target downlink channel transmitted on the associated SSs;
or
in a case that the quantity of the first TCI states is equal to 1, if the type of the target downlink channel is a PDCCH, and the transmission mode is a repetition transmission mode, the determining, by the network side device, a target TCI state of a target downlink channel based on target information comprises at least one of the following:
determining, by the network side device, that a repetition transmission configuration of the target downlink channel is invalid;
determining, by the network side device, one of the at least two associated SSs in which the target downlink channel is located, to transmit the target downlink channel;
determining, by the network side device, one of at least two CORESETs corresponding to the at least two associated SSs in which the target downlink channel is located, to transmit the target downlink channel;
determining, by the network side device, to perform PDCCH repetition transmission based on the first TCI state;
determining, by the network side device, that the target TCI state comprises at least two original TCI states of the target downlink channel; and
determining, by the network side device, to update a second preset TCI state in the at least two original TCI states of the target downlink channel to the first TCI state, wherein the second preset TCI state corresponds to the same first identification information as the first TCI state; the second preset TCI state is one of the at least two original TCI states of the target downlink channel that is at a preset location; or the second preset TCI state is associated with the first TCI state.

33. The method according to claim 32, wherein in a multi-DCI mode, CORESETs in which the at least two associated SSs are located are in different pieces of CORESETPoolIndex; and
in a single-DCI mode, the at least two associated SSs correspond to different pieces of the first identification information.

34. The method according to claim 33, wherein before the determining, by the network side device, a target TCI state of a target downlink channel based on target information, the method further comprises:
sending, by the network side device, first configuration information to the terminal, wherein
the first configuration information is used to configure SSs in CORESETs corresponding to different pieces of the first identification information to be associated with each other.

35. The method according to claim 21, wherein in a case that the quantity of the first TCI states is greater than 1, if the transmission mode of the target downlink channel is a multi-beam simultaneous transmission mode, the target TCI state comprises at least one of the following:
at least two first TCI states of a CORESET in which the target downlink channel is located;
at least two first TCI states corresponding to at least two pieces of the first identification information;
at least two TCI states of the target downlink channel that are determined based on the arrangement sequence or the location of the first TCI state;
all of the first TCI states; and
a first TCI state corresponding to a first PDCCH, wherein the first PDCCH comprises: a PDCCH that schedules the target downlink channel, a PDCCH that schedules the target downlink channel and that is in a multi-beam simultaneous transmission mode, any PDCCH, or any PDCCH in a multi-beam simultaneous transmission mode;
or
in a case that the quantity of the first TCI states is equal to 1, if the transmission mode of the target downlink channel is a multi-beam simultaneous transmission mode, the determining, by the network side device, a target TCI state of a target downlink channel based on target information comprises at least one of the following:
determining, by the network side device, that a multi-beam simultaneous transmission configuration of the target downlink channel is invalid;
determining, by the network side device, that the target downlink channel performs transmission based on the first TCI state;
determining, by the network side device, that the target TCI state comprises at least two original TCI states of the target downlink channel; and
determining, by the network side device, to update a third preset TCI state in the at least two original TCI states of the target downlink channel to the first TCI state, wherein the third preset TCI state corresponds to the same first identification information as the first TCI state; the third preset TCI state is one of the at least two original TCI states of the target downlink channel that is at a preset location; or the third preset TCI state is associated with the first TCI state.

36. The method according to claim 35, wherein in a case that the target TCI state comprises at least two first TCI states, the method further comprises:
determining, by the network side device, a QCL parameter of the target downlink channel based on a target parameter, wherein the target parameter comprises all QCL parameters of a fourth preset TCI state in the at least two first TCI states and an average delay parameter and a delay spread parameter of QCL-TypeA parameters of a TCI state other than the fourth preset TCI state in the at least two first TCI states.

37. The method according to claim 21, wherein in a case that the type of the target downlink channel is a PDCCH, and the transmission mode is a preset transmission mode, the target TCI state comprises a fifth preset TCI state, wherein the fifth preset TCI state comprises at least one of the following:
a first TCI state arranged at a preset location in all of the first TCI states;
a first TCI state corresponding to preset first identification information;
a first TCI state corresponding to the first identification information associated with the target downlink channel; and
a first TCI state indicated by the network side device from all of the first TCI states.

38. The method according to claim 21, wherein in a case that the quantity of the first TCI states is greater than 1, if the type of the target downlink channel is a PDSCH or a DL RS resource, the target TCI state comprises at least one of the following:
all of the first TCI states;
at least one first TCI state indicated by the network side device from all of the first TCI states; and
a sixth preset TCI state, wherein
the sixth preset TCI state comprises at least one of the following:
a first TCI state corresponding to a first codepoint or at least one of first TCI states corresponding to the first codepoint, wherein the first codepoint is a codepoint indicated by a TCI field in DCI indicating the first TCI state;
a first TCI state corresponding to preset first identification information;
a first TCI state that is the same as a TCI state of a PDCCH on which DCI that schedules the target downlink channel is located;
a first TCI state corresponding to first identification information associated with a PDCCH on which DCI that schedules the target downlink channel is located;
a first TCI state corresponding to the first identification information associated with the target downlink channel;
a first TCI state that is determined based on a second codepoint indicated by the network side device and that is dedicated to the target downlink channel, wherein the second codepoint is a codepoint indicated by a TCI field in DCI that schedules the target downlink channel, and the first TCI state corresponding to the second codepoint is a subset or a full set of the first TCI state corresponding to the first codepoint; and
a first TCI state that is the same as that of a PDCCH for repetition transmission or multi-beam simultaneous transmission, or at least one of first TCI states of the PDCCH for repetition transmission or multi-beam simultaneous transmission, wherein the PDCCH for the repetition transmission or the multi-beam simultaneous transmission is a PDCCH on which DCI indicating the first TCI state is located, or a PDCCH that schedules the target downlink channel;
or
in a case that the quantity of the first TCI states is equal to 1, if the type of the target downlink channel is a PDSCH or a DL RS resource, the determining, by the network side device, a target TCI state of a target downlink channel based on target information comprises at least one of the following:
in a case that the target downlink channel corresponds to the same first identification information as the first TCI state, determining, by the network side device, that the target TCI state comprises the first TCI state;
in a case that the target downlink channel and the first TCI state correspond to different pieces of the first identification information, determining, by the network side device, that the target TCI state comprises an original TCI state of the target downlink channel or determining that the target downlink channel stops transmission;
determining, by the network side device, that the target TCI state comprises a TCI state of a PDCCH that schedules or triggers the target downlink channel; and
in a case that the target downlink channel has at least two original TCI states, determining, by the network side device, the target TCI state as: the at least two original TCI states of the target downlink channel or the first TCI state, or determining, by the terminal, to update a seventh preset TCI state in the at least two original TCI states of the target downlink channel to the first TCI state, wherein the seventh preset TCI state corresponds to the same first identification information as the first TCI state; the seventh preset TCI state is one of the at least two original TCI states of the target downlink channel that is at a preset location; or the seventh preset TCI state is associated with the first TCI state.

39. The method according to claim 21, wherein in a case that the transmission mode of the target downlink channel is a repetition transmission mode, or the type of the target downlink channel is a PDSCH or a DL RS resource, and target DCI that schedules the target downlink channel simultaneously schedules at least two PDSCHs or at least two DL RS resources:
after the obtaining, by a terminal, common beam information indicated by a network side device, the method further comprises:
receiving, by the network side device, first feedback information from the terminal, wherein the first feedback information indicates that the terminal has correctly received the common beam information;
configuring, by the network side device based on the first feedback information, the common beam information to take effect; and
determining, by the network side device, that repetition transmission of the target downlink channel in a slot after a second moment, or a PDSCH or a DL RS resource that is scheduled by the target DCI and that is in a slot after the second moment uses the common beam information for transmission, wherein the second moment is an effective moment of the common beam information.

40. An apparatus for determining a downlink TCI state, wherein the apparatus is used in a network side device, and comprises:
an indication module, configured to indicate common beam information to a terminal, wherein the common beam information comprises N first transmission configuration indicator TCI states, the first TCI state is a joint TCI state or a separate downlink DL TCI state, and N is an integer greater than or equal to 1; and
a second determining module, configured to determine a target TCI state of a target downlink channel based on target information, wherein the target information comprises at least one of the following:
a quantity of the first TCI states;
an arrangement sequence or a location of the first TCI state;
a correspondence between the first TCI state and first identification information;
a type of the target downlink channel;
a transmission mode of the target downlink channel;
a time-domain behavior of the target downlink channel or a time-domain behavior of information carried on the target downlink channel;
a quantity of pieces of first identification information corresponding to the target downlink channel; and
a value of first identification information corresponding to the target downlink channel, wherein
the first identification information comprises at least one of the following:
identification information of a control resource set CORESET;
identification information of associated search spaces SS, wherein the associated SSs are used for repetition transmission of a PDCCH;
identification information of a CORESET in which the associated SSs are located;
transmission occasion information or transmission time information of the associated SSs;
a CORESET pool index CORESETPoolIndex;
identification ID information of a transmission reception point TRP;
identification information of a channel group;
identification information of a CORESET group; and
identification information of a physical uplink control channel PUCCH resource group.

41. A terminal, comprising a processor and a memory, wherein the memory stores a program or instructions executable on the processor, and the program or the instructions are executed by the processor to implement steps of the method for determining a downlink TCI state according to any one of claims 1 to 19.

42. A network side device, comprising a processor and a memory, wherein the memory stores a program or instructions executable on the processor, and the program or the instructions are executed by the processor to implement steps of the method for determining a downlink TCI state according to any one of claims 21 to 39.

43. A readable storage medium, wherein the readable storage medium stores a program or an instruction, and when the program or the instructions are executed by a processor, steps of the method for determining a downlink TCI state according to any one of claims 1 to 19 are implemented, or steps of the method for determining a downlink TCI state according to any one of claims 21 to 39 are implemented.
